(19) **Europäisches Patentamt**
**European Patent Office**
**Office européen des brevets**

(11) **EP 4 651 606 A1**

(12) **EUROPEAN PATENT APPLICATION**
published in accordance with Art. 153(4) EPC

(43) Date of publication:
**19.11.2025 Bulletin 2025/47**

(21) Application number: **24741641.5**

(22) Date of filing: **05.01.2024**

(51) International Patent Classification (IPC):
$H04W\ 72/25^{(2023.01)}$  $H04W\ 72/04^{(2023.01)}$
$H04W\ 72/542^{(2023.01)}$  $H04W\ 74/08^{(2024.01)}$
$H04W\ 24/08^{(2009.01)}$  $H04W\ 92/18^{(2009.01)}$

(52) Cooperative Patent Classification (CPC):
**H04W 24/08; H04W 72/04; H04W 72/25;**
**H04W 72/542; H04W 74/08; H04W 92/18**

(86) International application number:
**PCT/KR2024/000279**

(87) International publication number:
**WO 2024/151019 (18.07.2024 Gazette 2024/29)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **09.01.2023 KR 20230002984**

(71) Applicant: **LG Electronics Inc.**
**Yeongdeungpo-gu**
**Seoul 07336 (KR)**

(72) Inventors:
• **HWANG, Daesung**
**Seoul 06772 (KR)**
• **LEE, Seungmin**
**Seoul 06772 (KR)**
• **SEO, Hanbyul**
**Seoul 06772 (KR)**

(74) Representative: **Mooser, Sebastian Thomas**
**Wuesthoff & Wuesthoff**
**Patentanwälte und Rechtsanwalt PartG mbB**
**Schweigerstraße 2**
**81541 München (DE)**

(54) **METHOD AND DEVICE FOR PERFORMING COT SHARING IN UNLICENSED BAND**

(57) Provided are a method by which a first device performs wireless communication, and a device supporting same. The method may comprise the steps of: receiving first sidelink control information (SCI) including resource assignment information from a second device through a physical sidelink control channel (PSCCH); obtaining channel occupancy time (COT); on the basis of being set to share the COT for transmission on a first resource reserved by the resource assignment information, selecting a second resource which is before the first resource; and transmitting information for sharing the COT on the second resource to the second device.

**FIG. 15**

receiving, from second device, through PSCCH, first SCI including resource assignment information — S1510

obtaining COT — S1520

selecting, based on being configured to share COT for transmission on first resource reserved by resource assignment information, second resource before first resource — S1530

transmitting, to second device, information for sharing COT on second resource — S1540

**Description**

**TECHNICAL FIELD**

This disclosure relates to a wireless communication system.

**BACKGROUND ART**

Sidelink (SL) communication is a communication scheme in which a direct link is established between User Equipments (UEs) and the UEs exchange voice and data directly with each other without intervention of a base station. SL communication is under consideration as a solution to the overhead of a base station caused by rapidly increasing data traffic. Vehicle-to-everything (V2X) refers to a communication technology through which a vehicle exchanges information with another vehicle, a pedestrian, an object having an infrastructure (or infra) established therein, and so on. The V2X may be divided into 4 types, such as vehicle-to-vehicle (V2V), vehicle-to-infrastructure (V2I), vehicle-to-network (V2N), and vehicle-to-pedestrian (V2P). The V2X communication may be provided via a PC5 interface and/or Uu interface.

Meanwhile, as a wider range of communication devices require larger communication capacities, the need for mobile broadband communication that is more enhanced than the existing Radio Access Technology (RAT) is rising. Accordingly, discussions are made on services and user equipment (UE) that are sensitive to reliability and latency. And, a next generation radio access technology that is based on the enhanced mobile broadband communication, massive Machine Type Communication (MTC), Ultra-Reliable and Low Latency Communication (URLLC), and so on, may be referred to as a new radio access technology (RAT) or new radio (NR).

**DISCLOSURE**

**TECHNICAL SOLUTION**

In an embodiment, provided is a method for performing wireless communication by a first device. The method may comprise: receiving, from a second device, through a physical sidelink control channel (PSCCH), first sidelink control information (SCI) including resource assignment information; obtaining a channel occupancy time (COT); selecting, based on being configured to share the COT for transmission on a first resource reserved by the resource assignment information, a second resource before the first resource; and transmitting, to the second device, information for sharing the COT on the second resource.

In an embodiment, provided is a first device adapted to perform wireless communication. The first device may comprise: at least one transceiver; at least one processor; and at least one memory connected to the at least one processor and storing instructions that, based on being executed by the at least one processor, cause the first device to perform operations comprising: receiving, from a second device, through a physical sidelink control channel (PSCCH), first sidelink control information (SCI) including resource assignment information; obtaining a channel occupancy time (COT); selecting, based on being configured to share the COT for transmission on a first resource reserved by the resource assignment information, a second resource before the first resource; and transmitting, to the second device, information for sharing the COT on the second resource.

In an embodiment, provided is a processing device adapted to control a first device. The processing device may comprise: at least one processor; and at least one memory connected to the at least one processor and storing instructions that, based on being executed by the at least one processor, cause the first device to perform operations comprising: receiving, from a second device, through a physical sidelink control channel (PSCCH), first sidelink control information (SCI) including resource assignment information; obtaining a channel occupancy time (COT); selecting, based on being configured to share the COT for transmission on a first resource reserved by the resource assignment information, a second resource before the first resource; and transmitting, to the second device, information for sharing the COT on the second resource.

In an embodiment, provided is a non-transitory computer-readable storage medium storing instructions. The instructions, when executed, may cause a first device to perform operations comprising: receiving, from a second device, through a physical sidelink control channel (PSCCH), first sidelink control information (SCI) including resource assignment information; obtaining a channel occupancy time (COT); selecting, based on being configured to share the COT for transmission on a first resource reserved by the resource assignment information, a second resource before the first resource; and transmitting, to the second device, information for sharing the COT on the second resource.

**BRIEF DESCRIPTION OF THE DRAWINGS**

FIG. 1 shows a communication structure providable in a 6G system, based on an embodiment of the present disclosure.

FIG. 2 shows an electromagnetic spectrum, based on an embodiment of the present disclosure.

FIG. 3 shows a structure of an NR system, based on an embodiment of the present disclosure.

FIG. 4 shows a radio protocol architecture, based on an embodiment of the present disclosure.

FIG. 5 shows a structure of a radio frame of an NR, based on an embodiment of the present disclosure.

FIG. 6 shows a structure of a slot of an NR frame, based on an embodiment of the present disclosure.

FIG. 7 shows an example of a BWP, based on an embodiment of the present disclosure.

FIG. 8 shows a procedure of performing V2X or SL communication by a UE based on a transmission mode, based on an embodiment of the present disclosure.

FIG. 9 shows three cast types, based on an embodiment of the present disclosure.

FIG. 10 shows an interlaced RB, based on an embodiment of the present disclosure.

FIG. 11 shows an example of N transmission resources, based on an embodiment of the present disclosure.

FIG. 12 shows an example of N transmission resources, based on an embodiment of the present disclosure.

FIG. 13 shows an example in which transmission on a resource selected by a UE blocks channel access by another UE.

FIG. 14 shows an example in which a UE prevents channel access by another UE from being blocked through COT sharing, based on an embodiment of the present disclosure.

FIG. 15 shows a method for a first device to perform wireless communication, based on an embodiment of the present disclosure.

FIG. 16 shows a method for a second device to perform wireless communication, based on an embodiment of the present disclosure.

FIG. 17 shows a communication system 1, based on an embodiment of the present disclosure.

FIG. 18 shows wireless devices, based on an embodiment of the present disclosure.

FIG. 19 shows a signal process circuit for a transmission signal, based on an embodiment of the present disclosure.

FIG. 20 shows another example of a wireless device, based on an embodiment of the present disclosure.

FIG. 21 shows a hand-held device, based on an embodiment of the present disclosure.

FIG. 22 shows a vehicle or an autonomous vehicle, based on an embodiment of the present disclosure.

**MODE FOR INVENTION**

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

5G NR is a successive technology of LTE-A corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

A 6G (wireless communication) system has purposes such as (i) very high data rate per device, (ii) a very large number of connected devices, (iii) global connectivity, (iv) very low latency, (v) decrease in energy consumption of battery-free IoT devices, (vi) ultra-reliable connectivity, and (vii) connected intelligence with machine learning capacity. The vision of the 6G system may include four aspects such as intelligent connectivity, deep connectivity, holographic connectivity and ubiquitous connectivity, and the 6G system may satisfy the requirements shown in Table 1 below. That is, Table 1 shows the requirements of the 6G system.

[Table 1]

| Per device peak data rate | 1 Tbps |
|---|---|
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

The 6G system may have key factors such as enhanced mobile broadband (eMBB), ultra-reliable low latency communications (URLLC), massive machine type communications (mMTC), AI integrated communication, tactile internet, high throughput, high network capacity, high energy efficiency, low backhaul and access network congestion, and enhanced data security.

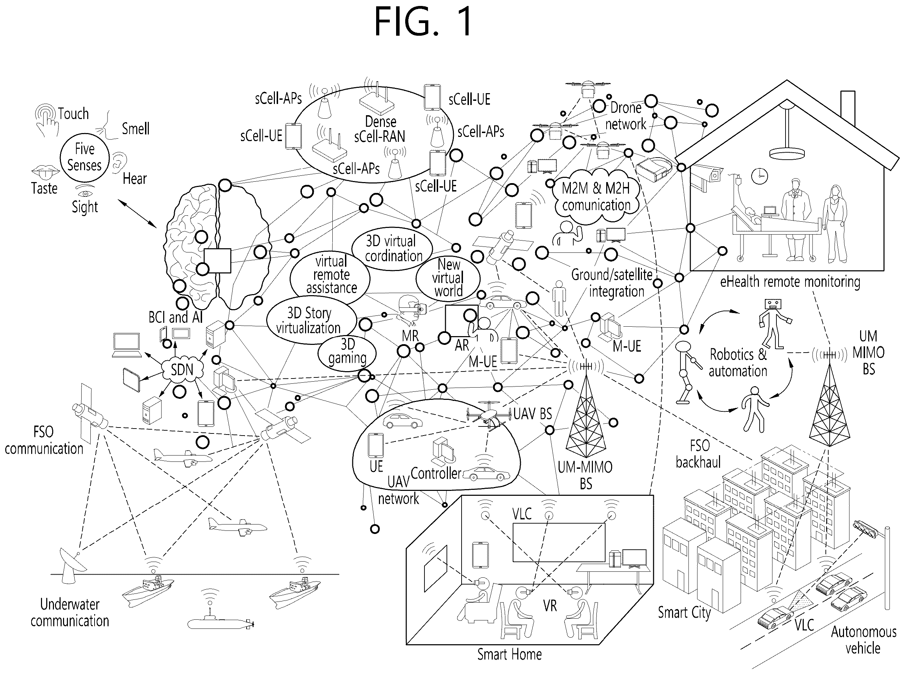

FIG. 1 shows a communication structure providable in a 6G system, based on an embodiment of the present disclosure. The embodiment of FIG. 1 may be combined with various embodiments of the present disclosure.

The 6G system will have 50 times higher simultaneous wireless communication connectivity than a 5G wireless communication system. URLLC, which is the key feature of 5G, will become more important technology by providing end-to-end latency less than 1 ms in 6G communication. The 6G system may have much better volumetric spectrum efficiency unlike frequently used domain spectrum efficiency. The 6G system may provide advanced battery technology for energy harvesting and very long battery life and thus mobile devices may not need to be separately charged in the 6G system. In 6G, new network characteristics may be as follows.

- Satellites integrated network: To provide a global mobile group, 6G will be integrated with satellite. Integrating terrestrial waves, satellites and public networks as one wireless communication system may be very important for 6G.
- Connected intelligence: Unlike the wireless communication systems of previous generations, 6G is innovative and wireless evolution may be updated from "connected things" to "connected intelligence". AI may be applied in each step (or each signal processing procedure which will be described below) of a communication procedure.
- Seamless integration of wireless information and energy transfer: A 6G wireless network may transfer power in order to charge the batteries of devices such as smartphones and sensors. Therefore, wireless information and energy transfer (WIET) will be integrated.
- Ubiquitous super 3-dimension connectivity: Access to networks and core network functions of drones and very low earth orbit satellites will establish super 3D connection in 6G ubiquitous.

In the new network characteristics of 6G, several general requirements may be as follows.

- Small cell networks: The idea of a small cell network was introduced in order to improve received signal quality as a result of throughput, energy efficiency and spectrum efficiency improvement in a cellular system. As a result, the small cell network is an essential feature for 5G and beyond 5G (5 GB) communication systems. Accordingly, the 6G communication system also employs the characteristics of the small cell network.
- Ultra-dense heterogeneous network: Ultra-dense heterogeneous networks will be another important characteristic of the 6G communication system. A multi-tier network composed of heterogeneous networks improves overall QoS and reduces costs.
- High-capacity backhaul: Backhaul connection is characterized by a high-capacity backhaul network in order to support high-capacity traffic. A high-speed optical fiber and free space optical (FSO) system may be a possible solution for this problem.
- Radar technology integrated with mobile technology: High-precision localization (or location-based service) through communication is one of the functions of the 6G wireless communication system. Accordingly, the radar system will be integrated with the 6G network.
- Softwarization and virtualization: Softwarization and virtualization are two important functions which are the bases of a design process in a 5 GB network in order to ensure flexibility, reconfigurability and programmability.

Core implementation technology of 6G system is described below.

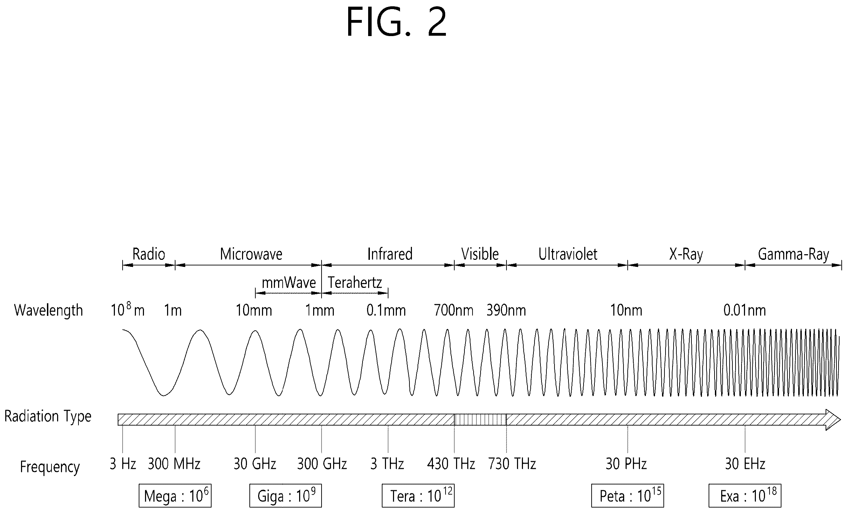

- Artificial Intelligence (AI): Technology which is most important in the 6G system and will be newly introduced is AI. AI was not involved in the 4G system. A 5G system will support partial or very limited AI. However, the 6G system will support AI for full automation. Advance in machine learning will create a more intelligent network for real-time communication in 6G. When AI is introduced to communication, real-time data transmission may be simplified and improved. AI may determine a method of performing complicated target tasks using countless analysis. That is, AI may increase efficiency and reduce processing delay. Operation consuming time such as handover, network selection, and resource scheduling immediately performed by using AI. AI may also play an important role in M2M, machine-to-human, and human-to-machine. In addition, AI may be a prompt communication in brain computer interface (BCI). An AI based communication system may be supported by metamaterial, intelligence structure, intelligence network, intelligence device, intelligence cognitive radio, self-maintaining wireless network, and machine learning.
- Terahertz (THz) communication: A data rate may increase by increasing bandwidth. This may be performed by using sub-TH communication with wide bandwidth and applying advanced massive MIMO technology. THz waves which are known as sub-millimeter radiation, generally indicates a frequency band between 0.1 THz and 10 THz with a corresponding wavelength in a range of 0.03 mm to 3 mm. A band range of 100 GHz to 300 GHz (sub THz band) is regarded as a main part of the THz band for cellular communication. When the sub-THz band is added to the mmWave band, the 6G cellular communication capacity increases. 300 GHz to 3 THz of the defined THz band is in a far infrared (IR) frequency band. A band of 300 GHz to 3 THz is a part of an optical band but is at the border of the optical band and is just behind an RF band. Accordingly, the band of 300 GHz to 3 THz has similarity with RF. FIG. 2 shows an electromagnetic spectrum, based on an embodiment of the present disclosure. The embodiment of FIG. 2 may be combined with various embodiments of the present disclosure. The main characteristics of THz communication include (i) bandwidth widely available to support a very high data rate and (ii) high path loss occurring at a high frequency (a high directional antenna is indispensable). A narrow beam width generated in the high directional antenna reduces interference. The small wavelength of a THz signal allows a larger number of antenna elements to be integrated with a device and BS operating in this band. Therefore, an advanced adaptive arrangement technology capable of overcoming a range limitation may be used.
- Massive MIMO technology (large-scale MIMO)
- Hologram beamforming (HBF)
- Optical wireless technology
- Free space optical backhaul network (FSO Backhaul Network)
- Non-terrestrial networks (NTN)
- Quantum communication
- Cell-free communication
- Integration of wireless information and power transmission
- Integration of wireless communication and sensing
- Integrated access and backhaul network
- Big data analysis
- Reconfigurable intelligent surface

- Metaverse
- Block-chain
- Unmanned aerial vehicle (UAV): An unmanned aerial vehicle (UAV) or drone will be an important factor in 6G wireless communication. In most cases, a high-speed data wireless connection is provided using UAV technology. A base station entity is installed in the UAV to provide cellular connectivity. UAVs have certain features, which are not found in fixed base station infrastructures, such as easy deployment, strong line-of-sight links, and mobility-controlled degrees of freedom. During emergencies such as natural disasters, the deployment of terrestrial telecommunications infrastructure is not economically feasible and sometimes services cannot be provided in volatile environments. The UAV can easily handle this situation. The UAV will be a new paradigm in the field of wireless communications. This technology facilitates the three basic requirements of wireless networks, such as eMBB, URLLC and mMTC. The UAV can also serve a number of purposes, such as network connectivity improvement, fire detection, disaster emergency services, security and surveillance, pollution monitoring, parking monitoring, and accident monitoring. Therefore, UAV technology is recognized as one of the most important technologies for 6G communication.
- Autonomous driving (self-driving): For perfect autonomous driving, it is necessary to notify dangerous situation of each other through communication between vehicle and vehicle, to check information like parking information location and signal change time through communication between vehicle and infrastructure such as parking lots and/or traffic lights. Vehicle to everything (V2X) that is a core element for establishing an autonomous driving infrastructure is a technology that vehicle communicates and shares with various elements in road for autonomous driving such as vehicle to vehicle (V2V), vehicle to infrastructure (V2I). To maximize a performance of autonomous driving and to secure high safety, high transmission speed and low latency technology have to be needed. Furthermore, to directly control vehicle in dangerous situation and to actively intervene vehicle driving beyond a level of a warning or a guidance message to driver, as the amount of the information to transmit and receive is larger, autonomous driving is expected to be maximized in 6G being higher transmission speed and lower latency than 5G.

For clarity in the description, 5G NR is mainly described, but the technical idea according to an embodiment of the present disclosure is not limited thereto. Various embodiments of the present disclosure can also be applied to 6G communication systems.

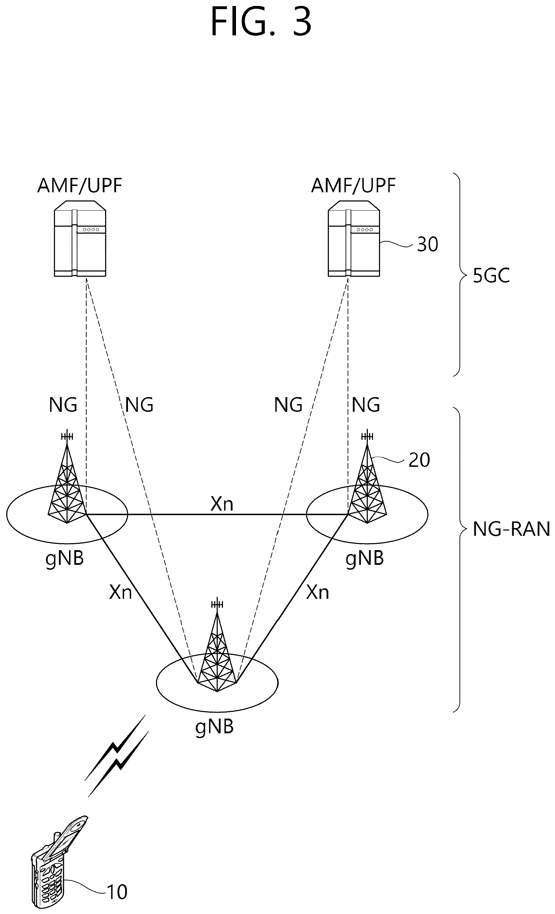

FIG. 3 shows a structure of an NR system, based on an embodiment of the present disclosure. The embodiment of FIG. 3 may be combined with various embodiments of the present disclosure.

Referring to FIG. 3, a next generation-radio access network (NG-RAN) may include a BS 20 providing a UE 10 with a user plane and control plane protocol termination. For example, the BS 20 may include a next generation-Node B (gNB) and/or an evolved-NodeB (eNB). For example, the UE 10 may be fixed or mobile and may be referred to as other terms, such as a mobile station (MS), a user terminal (UT), a subscriber station (SS), a mobile terminal (MT), wireless device, and so on. For example, the BS may be referred to as a fixed station which communicates with the UE 10 and may be referred to as other terms, such as a base transceiver system (BTS), an access point (AP), and so on.

The embodiment of FIG. 3 exemplifies a case where only the gNB is included. The BSs 20 may be connected to one another via Xn interface. The BS 20 may be connected to one another via 5th generation (5G) core network (5GC) and NG interface. More specifically, the BSs 20 may be connected to an access and mobility management function (AMF) 30 via NG-C interface, and may be connected to a user plane function (UPF) 30 via NG-U interface.

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

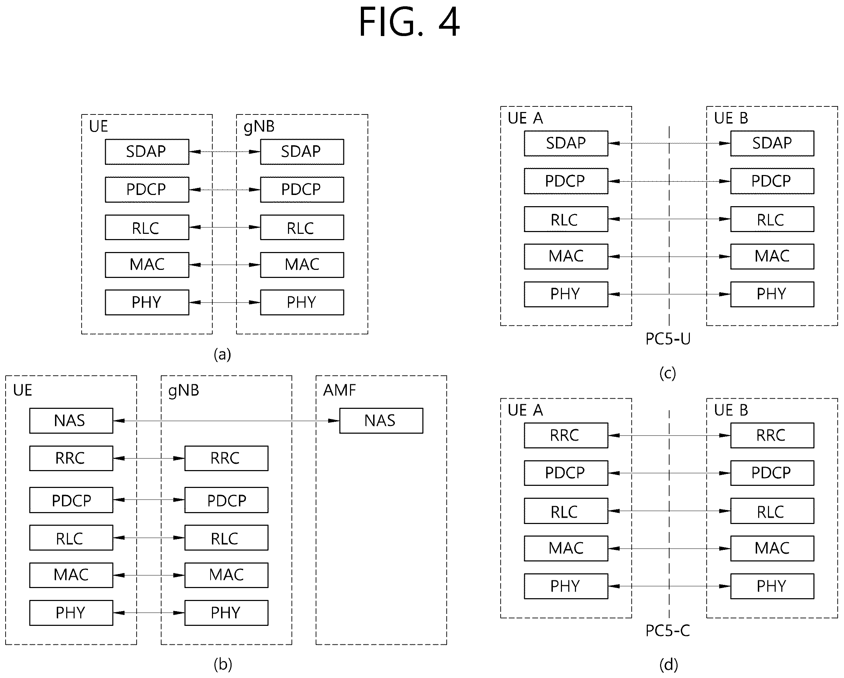

FIG. 4 shows a radio protocol architecture, based on an embodiment of the present disclosure. The embodiment of FIG. 4 may be combined with various embodiments of the present disclosure. Specifically, (a) of FIG. 4 shows a radio protocol stack of a user plane for Uu communication, and (b) of FIG. 4 shows a radio protocol stack of a control plane for Uu communication. (c) of FIG. 4 shows a radio protocol stack of a user plane for SL communication, and (d) of FIG. 4 shows a radio protocol stack of a control plane for SL communication.

Referring to FIG. 4, a physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC _CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

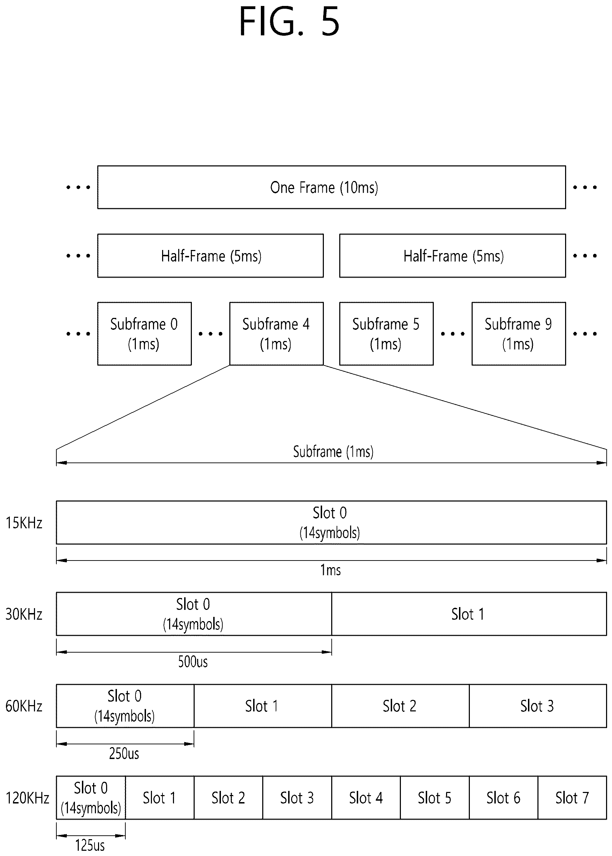

FIG. 5 shows a structure of a radio frame of an NR, based on an embodiment of the present disclosure. The embodiment of FIG. 5 may be combined with various embodiments of the present disclosure.

Referring to FIG. 5, in the NR, a radio frame may be used for performing uplink and downlink transmission. A radio frame has a length of 10ms and may be defined to be configured of two half-frames (HFs). A half-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 2 shown below represents an example of a number of symbols per slot ($N^{slot}_{symb}$), a number slots per frame ($N^{frame,u}_{slot}$), and a number of slots per subframe ($N^{subtrame,u}_{slot}$) based on an SCS configuration (u), in a case where a normal CP or an extended CP is used.

[Table 2]

| CP type | SCS ($15*2^u$) | $N^{slot}_{symb}$ | $N^{frame,u}_{slot}$ | $N^{subframe,u}_{slot}$ |
|---|---|---|---|---|
| normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| extended CP | 60kHz (u=2) | 12 | 40 | 4 |

In an NR system, OFDM(A) numerologies (e.g., SCS, CP length, and so on) between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells.

In the NR, multiple numerologies or SCSs for supporting diverse 5G services may be supported. For example, in case an SCS is 15kHz, a wide area of the conventional cellular bands may be supported, and, in case an SCS is 30kHz/60kHz a dense-urban, lower latency, wider carrier bandwidth may be supported. In case the SCS is 60kHz or higher, a bandwidth that is greater than 24.25GHz may be used in order to overcome phase noise.

An NR frequency band may be defined as two different types of frequency ranges. The two different types of frequency ranges may be FR1 and FR2. The values of the frequency ranges may be changed (or varied), and, for example, the two different types of frequency ranges may be as shown below in Table 3. Among the frequency ranges that are used in an NR system, FR1 may mean a "sub 6GHz range", and FR2 may mean an "above 6GHz range" and may also be referred to as a millimeter wave (mmW).

[Table 3]

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed (or varied). For example, as shown below in Table 4, FR1 may include a band within a range of 410MHz to 7125MHz. More specifically, FR1 may include a frequency band of 6GHz (or 5850, 5900, 5925 MHz, and so on) and higher. For example, a frequency band of 6GHz (or 5850, 5900, 5925 MHz, and so on) and higher being included in FR1 mat include an unlicensed band. The unlicensed band may be used for diverse purposes, e.g., the unlicensed band for vehicle-specific communication (e.g., automated driving).

[Table 4]

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

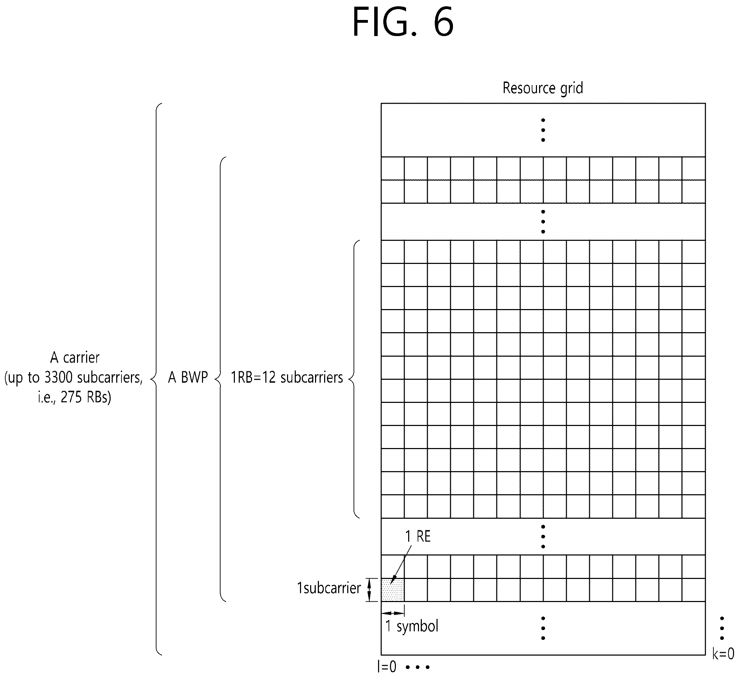

FIG. 6 shows a structure of a slot of an NR frame, based on an embodiment of the present disclosure. The embodiment of FIG. 6 may be combined with various embodiments of the present disclosure.

Referring to FIG. 6, a slot includes a plurality of symbols in a time domain. For example, in case of a normal CP, one slot may include 14 symbols. However, in case of an extended CP, one slot may include 12 symbols. Alternatively, in case of a normal CP, one slot may include 7 symbols. However, in case of an extended CP, one slot may include 6 symbols.

A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

Hereinafter, a bandwidth part (BWP) and a carrier will be described.

The BWP may be a set of consecutive physical resource blocks (PRBs) in a given numerology. The PRB may be selected from consecutive sub-sets of common resource blocks (CRBs) for the given numerology on a given carrier

For example, the BWP may be at least any one of an active BWP, an initial BWP, and/or a default BWP. For example, the UE may not monitor downlink radio link quality in a DL BWP other than an active DL BWP on a primary cell (PCell). For example, the UE may not receive PDCCH, physical downlink shared channel (PDSCH), or channel state information - reference signal (CSI-RS) (excluding RRM) outside the active DL BWP. For example, the UE may not trigger a channel state information (CSI) report for the inactive DL BWP. For example, the UE may not transmit physical uplink control channel (PUCCH) or physical uplink shared channel (PUSCH) outside an active UL BWP. For example, in a downlink case, the initial BWP may be given as a consecutive RB set for a remaining minimum system information (RMSI) control resource set (CORESET) (configured by physical broadcast channel (PBCH)). For example, in an uplink case, the initial BWP may be given by system information block (SIB) for a random access procedure. For example, the default BWP may be configured by a higher layer. For example, an initial value of the default BWP may be an initial DL BWP. For energy saving, if the UE fails to detect downlink control information (DCI) during a specific period, the UE may switch the active BWP of the UE to the default BWP.

Meanwhile, the BWP may be defined for SL. The same SL BWP may be used in transmission and reception. For example, a transmitting UE may transmit a SL channel or a SL signal on a specific BWP, and a receiving UE may receive the SL channel or the SL signal on the specific BWP. In a licensed carrier, the SL BWP may be defined separately from a Uu BWP, and the SL BWP may have configuration signaling separate from the Uu BWP. For example, the UE may receive a configuration for the SL BWP from the BS/network. For example, the UE may receive a configuration for the Uu BWP from the BS/network. The SL BWP may be (pre-)configured in a carrier with respect to an out-of-coverage NR V2X UE and an RRC_IDLE UE. For the UE in the RRC _CONNECTED mode, at least one SL BWP may be activated in the carrier.

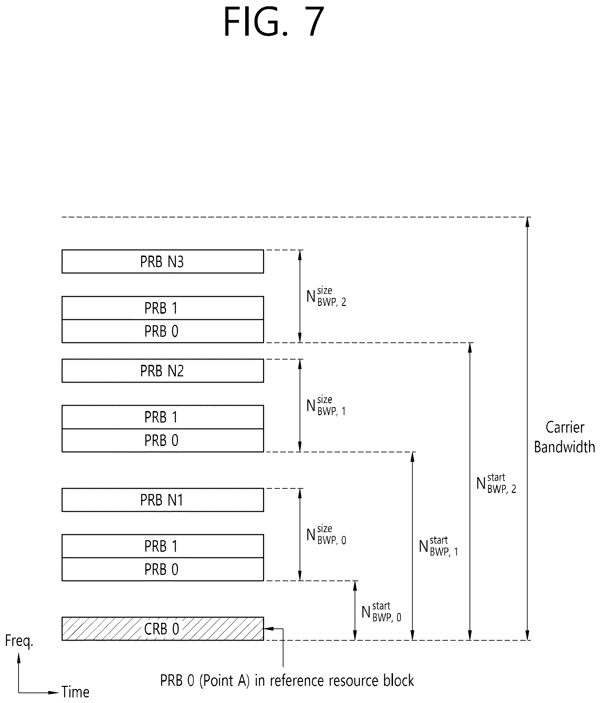

FIG. 7 shows an example of a BWP, based on an embodiment of the present disclosure. The embodiment of FIG. 7 may be combined with various embodiments of the present disclosure. It is assumed in the embodiment of FIG. 7 that the number of BWPs is 3.

Referring to FIG. 7, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset $N^{start}_{BWP}$ from the point A, and a bandwidth $N^{size}_{BWP}$. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

Hereinafter, V2X or SL communication will be described.

A sidelink synchronization signal (SLSS) may include a primary sidelink synchronization signal (PSSS) and a secondary sidelink synchronization signal (SSSS), as a SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

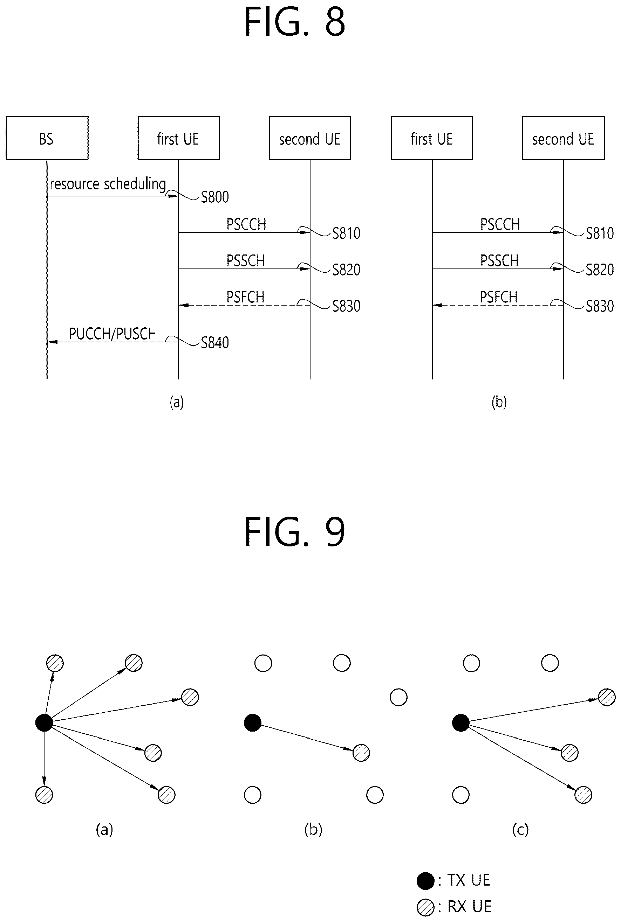

FIG. 8 shows a procedure of performing V2X or SL communication by a UE based on a transmission mode, based on an embodiment of the present disclosure. The embodiment of FIG. 8 may be combined with various embodiments of the present disclosure. In various embodiments of the present disclosure, the transmission mode may be called a mode or a resource allocation mode. Hereinafter, for convenience of explanation, in LTE, the transmission mode may be called an LTE transmission mode. In NR, the transmission mode may be called an NR resource allocation mode.

For example, (a) of FIG. 8 shows a UE operation related to an LTE transmission mode 1 or an LTE transmission mode 3. Alternatively, for example, (a) of FIG. 8 shows a UE operation related to an NR resource allocation mode 1. For example, the LTE transmission mode 1 may be applied to general SL communication, and the LTE transmission mode 3 may be applied to V2X communication.

For example, (b) of FIG. 8 shows a UE operation related to an LTE transmission mode 2 or an LTE transmission mode 4. Alternatively, for example, (b) of FIG. 8 shows a UE operation related to an NR resource allocation mode 2.

Referring to (a) of FIG. 8, in the LTE transmission mode 1, the LTE transmission mode 3, or the NR resource allocation mode 1, a base station may schedule SL resource(s) to be used by a UE for SL transmission. For example, in step S800, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S810, the first UE may transmit a PSCCH (e.g., sidelink control information (SCI) or 1st-stage SCI) to a second UE based on the resource scheduling. In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE. For example, HARQ feedback information (e.g., NACK information or ACK information) may be received from the second UE through the PSFCH. In step S840, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling. For example, a format of the DCI may be a DCI format 3_0 or a DCI format 3 1.

Referring to (b) of FIG. 8, in the LTE transmission mode 2, the LTE transmission mode 4, or the NR resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S810, a first UE which has selected resource(s) from a resource pool by itself may transmit a PSCCH (e.g., sidelink control information (SCI) or 1st-stage SCI) to a second UE by using the resource(s). In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE.

Referring to (a) or (b) of FIG. 8, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1st SCI, a first SCI, a 1st-stage SCI or a 1st-stage SCI format, and a SCI transmitted through a PSSCH may be referred to as a 2nd SCI, a second SCI, a 2nd-stage SCI or a 2nd-stage SCI format. For example, the 1st-stage SCI format may include a SCI format 1-A, and the 2nd-stage SCI format may include a SCI format 2-A and/or a SCI format 2-B.

Hereinafter, an example of SCI format 1-A will be described.

SCI format 1-A is used for the scheduling of PSSCH and 2nd-stage-SCI on PSSCH.

The following information is transmitted by means of the SCI format 1-A:

- Priority - 3 bits
- Frequency resource assignment - ceiling $(\log_2(N^{SL}_{subChannel}(N^{SL}_{subChannel}+1)/2))$ bits when the value of the higher layer parameter sl-MaxNumPerReserve is configured to 2; otherwise ceiling $\log_2(N^{SL}_{subChannel}(N^{SL}_{subChannel}+1)(2N^{SL}_{subChannel}+1)/6)$ bits when the value of the higher layer parameter sl-MaxNumPerReserve is configured to 3
- Time resource assignment - 5 bits when the value of the higher layer parameter sl-MaxNumPerReserve is configured to 2; otherwise 9 bits when the value of the higher layer parameter sl-MaxNumPerReserve is configured to 3

- Resource reservation period - ceiling $(\log_2 N_{rsv\_period})$ bits, where $N_{rsv\_period}$ is the number of entries in the higher layer parameter sl-ResourceReservePeriodList, if higher layer parameter sl-MultiReserveResource is configured; 0 bit otherwise
- DMRS pattern - ceiling $(\log_2 N_{pattern})$ bits, where $N_{pattern}$ is the number of DMRS patterns configured by higher layer parameter sl-PSSCH-DMRS-TimePatternList
- 2$^{nd}$-stage SCI format - 2 bits as defined in Table 5
- Beta_offset indicator - 2 bits as provided by higher layer parameter sl-BetaOffsets2ndSCI
- Number of DMRS port - 1 bit as defined in Table 6
- Modulation and coding scheme - 5 bits
- Additional MCS table indicator - 1 bit if one MCS table is configured by higher layer parameter sl-Additional-MCS-Table; 2 bits if two MCS tables are configured by higher layer parameter sl- Additional-MCS-Table; 0 bit otherwise
- PSFCH overhead indication - 1 bit if higher layer parameter sl-PSFCH-Period = 2 or 4; 0 bit otherwise
- Reserved - a number of bits as determined by higher layer parameter sl-NumReservedBits, with value set to zero.

[Table 5]

| Value of 2nd-stage SCI format field | 2nd-stage SCI format |
| --- | --- |
| 00 | SCI format 2-A |
| 01 | SCI format 2-B |
| 10 | Reserved |
| 11 | Reserved |

[Table 6]

| Value of the Number of DMRS port field | Antenna ports |
| --- | --- |
| 0 | 1000 |
| 1 | 1000 and 1001 |

Hereinafter, an example of SCI format 2-A will be described.

SCI format 2-A is used for the decoding of PSSCH, with HARQ operation when HARQ-ACK information includes ACK or NACK, when HARQ-ACK information includes only NACK, or when there is no feedback of HARQ-ACK information.

The following information is transmitted by means of the SCI format 2-A:

- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Cast type indicator - 2 bits as defined in Table 7
- CSI request - 1 bit

[Table 7]

| Value of Cast type indicator | Cast type |
| --- | --- |
| 00 | Broadcast |
| 01 | Groupcast when HARQ-ACK information includes ACK or NACK |
| 10 | Unicast |
| 11 | Groupcast when HARQ-ACK information includes only NACK |

Hereinafter, an example of SCI format 2-B will be described.

SCI format 2-B is used for the decoding of PSSCH, with HARQ operation when HARQ-ACK information includes only NACK, or when there is no feedback of HARQ-ACK information.

The following information is transmitted by means of the SCI format 2-B:

- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Zone ID - 12 bits
- Communication range requirement - 4 bits determined by higher layer parameter sl-ZoneConfigMCR-Index

Referring to (a) or (b) of FIG. 8, in step S830, the first UE may receive the PSFCH. For example, the first UE and the second UE may determine a PSFCH resource, and the second UE may transmit HARQ feedback to the first UE using the PSFCH resource.

Referring to (a) of FIG. 8, in step S840, the first UE may transmit SL HARQ feedback to the base station through the PUCCH and/or the PUSCH.

FIG. 9 shows three cast types, based on an embodiment of the present disclosure. The embodiment of FIG. 9 may be combined with various embodiments of the present disclosure. Specifically, (a) of FIG. 9 shows broadcast-type SL communication, (b) of FIG. 9 shows unicast type-SL communication, and (c) of FIG. 9 shows groupcast-type SL communication. In case of the unicast-type SL communication, a UE may perform one-to-one communication with respect to another UE. In case of the groupcast-type SL transmission, the UE may perform SL communication with respect to one or more UEs in a group to which the UE belongs. In various embodiments of the present disclosure, SL groupcast communication may be replaced with SL multicast communication, SL one-to-many communication, or the like.

Hereinafter, a hybrid automatic repeat request (HARQ) procedure will be described.

For example, the SL HARQ feedback may be enabled for unicast. For example, the SL HARQ feedback may be enabled for groupcast. For example, two HARQ feedback options may be supported for groupcast.

(1) Groupcast option 1: After the receiving UE decodes the PSCCH of which the target is the receiving UE, if the receiving UE fails in decoding of a transport block related to the PSCCH, the receiving UE may transmit negative acknowledgement (NACK) to the transmitting UE through a PSFCH. Otherwise, if the receiving UE decodes the PSCCH of which the target is the receiving UE and if the receiving UE successfully decodes the transport block related to the PSCCH, the receiving UE may not transmit positive acknowledgement (ACK) to the transmitting UE.

(2) Groupcast option 2: After the receiving UE decodes the PSCCH of which the target is the receiving UE, if the receiving UE fails in decoding of the transport block related to the PSCCH, the receiving UE may transmit NACK to the transmitting UE through the PSFCH. In addition, if the receiving UE decodes the PSCCH of which the target is the receiving UE and if the receiving UE successfully decodes the transport block related to the PSCCH, the receiving UE may transmit ACK to the transmitting UE through the PSFCH.

Hereinafter, UE procedure for reporting HARQ-ACK on sidelink will be described.

A UE can be indicated by an SCI format scheduling a PSSCH reception, in one or more sub-channels from a number of $N^{PSSCH}_{subch}$ sub-channels, to transmit a PSFCH with HARQ-ACK information in response to the PSSCH reception. The UE provides HARQ-ACK information that includes ACK or NACK, or only NACK.

A UE can be provided, by sl-PSFCH-Period-r16, a number of slots in a resource pool for a period of PSFCH transmission occasion resources. If the number is zero, PSFCH transmissions from the UE in the resource pool are disabled. A UE expects that a slot $t'^{SL}_k$ $(0 \le k < T'_{max})$ has a PSFCH transmission occasion resource if $k \bmod N^{PSFCH}_{PSSCH}$ = 0, where $t'^{SL}_k$ is a slot that belongs to the resource pool, $T'_{max}$ is a number of slots that belong to the resource pool within 10240 msec, and $N^{PSFCH}_{PSSCH}$ is provided by sl-PSFCH-Period-r16. A UE may be indicated by higher layers to not transmit a PSFCH in response to a PSSCH reception. If a UE receives a PSSCH in a resource pool and the HARQ feedback enabled/disabled indicator field in an associated SCI format 2-A or a SCI format 2-B has value 1, the UE provides the HARQ-ACK information in a PSFCH transmission in the resource pool. The UE transmits the PSFCH in a first slot that includes PSFCH resources and is at least a number of slots, provided by sl-MinTimeGapPSFCH-r16, of the resource pool after a last slot of the PSSCH reception.

A UE is provided by sl-PSFCH-RB-Set-r16 a set of $M^{PSFCH}_{PRB,set}$ PRBs in a resource pool for PSFCH transmission in a PRB of the resource pool. For a number of $N_{subch}$ sub-channels for the resource pool, provided by sl-NumSubchannel, and a number of PSSCH slots associated with a PSFCH slot that is less than or equal to

$N^{PSFCH}_{PSSCH}$, the UE allocates the $[(i+j \cdot N^{PSFCH}_{PSSCH}) \cdot M^{PSFCH}_{subch,slot}, (i+1+j \cdot N^{PSFCH}_{PSSCH}) \cdot M^{PSFCH}_{subch,slot}-1]$ PRBs from the $M_{PRB,set}^{PSFCH}$ PRBs to slot i among the **PSSCH** slots associated with the PSFCH slot and sub-channel j, where $M^{PSFCH}_{subch,slot} = M^{PSFCH}_{PRB,set}/(N_{subch} \cdot N^{PSFCH}_{PSSCH})$, $0 \leq i < N^{PSFCH}_{PSSCH}$, $0 \leq j < N_{subch}$, and the allocation starts in an ascending order of i and continues in an ascending order of j. The UE expects that $M^{PSFCH}_{PRB,set}$ is a multiple of $N_{subch} \cdot N^{PSFCH}_{PSSCH}$.

A UE determines a number of PSFCH resources available for multiplexing HARQ-ACK information in a PSFCH transmission as $R^{PSFCH}_{PRB,CS} = N^{PSFCH}_{type} \cdot M^{PSFCH}_{subch,slot} \cdot N^{PSFCH}_{CS}$ where $N^{PSFCH}_{CS}$ is a number of cyclic shift pairs for the resource pool and, based on an indication by higher layers,

- $N^{PSFCH}_{type} = 1$ and the $M^{PSFCH}_{subch,slot}$ PRBs are associated with the starting sub-channel of the corresponding PSSCH

- $N^{PSFCH}_{type} = N^{PSSCH}_{subch}$ and the $N^{PSSCH}_{subch} \cdot M^{PSFCH}_{subch,slot}$ PRBs are associated with one or more sub-channels from the $N^{PSSCH}_{subch}$ sub-channels of the corresponding PSSCH

The PSFCH resources are first indexed according to an ascending order of the PRB index, from the $N^{PSFCH}_{type} \cdot M^{PSFCH}_{subch,slot}$ PRBs, and then according to an ascending order of the cyclic shift pair index from the $N^{PSFCH}_{CS}$ cyclic shift pairs.

A UE determines an index of a PSFCH resource for a PSFCH transmission in response to a PSSCH reception as $(P_{ID} + M_{ID})$ mod $R^{PSFCH}_{PRB,CS}$ where $P_{ID}$ is a physical layer source ID provided by SCI format 2-A or 2-B scheduling the PSSCH reception, and $M_{ID}$ is the identity of the UE receiving the PSSCH as indicated by higher layers if the UE detects a SCI format 2-A with Cast type indicator field value of "01" ; otherwise, $M_{ID}$ is zero.

A UE determines a $m_0$ value, for computing a value of cyclic shift $\alpha$, from a cyclic shift pair index corresponding to a PSFCH resource index and from $N^{PSFCH}_{CS}$ using Table 8.

[Table 8]

| $N^{PSFCH}_{CS}$ | $m_0$ | | | | | |
|---|---|---|---|---|---|---|
| | cyclic shift pair index 0 | cyclic shift pair index 1 | cyclic shift pair index 2 | cyclic shift pair index 3 | cyclic shift pair index 4 | cyclic shift pair index 5 |
| 1 | 0 | - | - | - | - | - |
| 2 | 0 | 3 | - | - | - | - |
| 3 | 0 | 2 | 4 | - | - | - |
| 6 | 0 | 1 | 2 | 3 | 4 | 5 |

A UE determines a $m_{cs}$ value, for computing a value of cyclic shift $\alpha$, as in Table 9 if the UE detects a SCI format 2-A with Cast type indicator field value of "01" or "10", or as in Table 10 if the UE detects a SCI format 2-B or a SCI format 2-A with Cast type indicator field value of "11". The UE applies one cyclic shift from a cyclic shift pair to a sequence used for the PSFCH transmission.

[Table 9]

| HARQ-ACK Value | 0 (NACK) | 1 (ACK) |
|---|---|---|
| Sequence cyclic shift | 0 | 6 |

[Table 10]

| HARQ-ACK Value | 0 (NACK) | 1 (ACK) |
|---|---|---|
| Sequence cyclic shift | 0 | N/A |

Meanwhile, a set of (equally spaced) non-contiguous RBs on a frequency may be allocated to a UE. This set of non-contiguous RBs may be referred to as interlaced RBs. This may be useful in spectrum (e.g., shared spectrum) that is subject to regulations such as occupied channel bandwidth (OCB), power spectral density (PSD), etc.

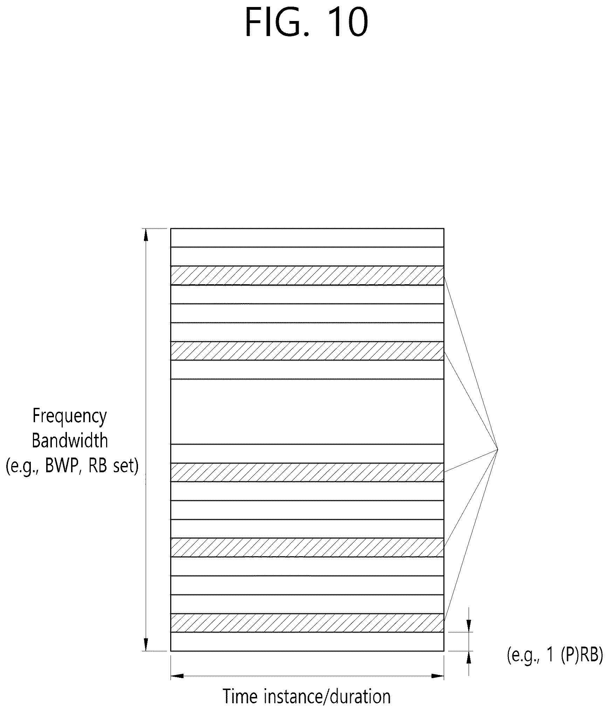

FIG. 10 shows an interlaced RB, based on an embodiment of the present disclosure. The embodiment of FIG. 10 may be combined with various embodiments of the present disclosure.

Referring to FIG. 10, interlaces of RBs may be defined in a frequency domain. An interlace $m \in \{0, 1, ..., M-1\}$ may comprise (common) RBs {m, M+m, 2M+m, 3M+m, ...}, where M may represent the number of interlaced RBs given by Table 11.

[Table 11]

| u | M |
|---|---|
| 0 | 10 |
| 1 | 5 |

A communication device (e.g., a device, a UE, a vehicle, a drone, etc. proposed in various embodiments of the present disclosure) may transmit a signal/channel by using one or more interlaced RBs.

Meanwhile, in the next-generation system, the UE may perform a sidelink transmission operation and/or a sidelink reception operation in an unlicensed band. Meanwhile, for the operation in the unlicensed band, a channel sensing operation (e.g., energy detection/measurement) for a channel to be used may be performed before the UE performs transmission, depending on band-specific regulations or requirements. Only if the channel or the set of RBs to be used is determined to be IDLE as a result of the channel sensing (e.g., if the measured energy is less than or equal to a specific threshold), the UE may perform transmission in the unlicensed band. If the channel or the RB set to be used is determined to be BUSY as a result of the channel sensing (e.g., if the measured energy is greater than or equal to a specific threshold), the UE may cancel all or part of transmission in the unlicensed band. Meanwhile, in the operation in the unlicensed band, the UE may skip or simplify the channel sensing operation (make a channel sensing interval relatively small) within a certain time after transmission within a specific time duration. On the other hand, after the certain time has passed after the transmission, the UE may determine whether to transmit after performing the usual channel sensing operation. Meanwhile, for transmission in the unlicensed band, power spectral density (PSD) and/or a size of frequency occupation domain and/or a time interval of a signal/channel transmitted by the UE may be greater than or equal to a certain level, respectively, depending on regulations or requirements. Meanwhile, in the unlicensed band, in order to simplify channel sensing, it may be informed through channel occupancy time (COT) duration information that a channel obtained based on initial general channel sensing is occupied for a certain time, and the maximum length of the COT duration may be configured differently depending on a channel access priority class (CAPC) or a priority value of a data packet or a service.

Meanwhile, a base station may share a COT duration obtained by the base station based on channel sensing through DCI transmission, and the UE may perform a specific (indicated) channel sensing type and/or CP extension within the COT duration based on DCI information received from the base station. Meanwhile, a UE may share a COT duration obtained by the UE based on channel sensing with a base station that is a destination of UL transmission of the UE, and the related information may be provided through UL through configured grant-uplink control information (CG-UCI). In the above situation, the base station may perform simplified channel sensing within the COT duration shared by the UE. In the case of sidelink communication, there is a situation in which a UE receives, from a base station, information on resources to be used for sidelink transmission through DCI or RRC signaling, such as the mode 1 resource allocation (RA) operation, and there is a situation in which a UE performs sidelink transmission and reception through an inter-UE sensing operation without the assistance of the base station, such as the mode 2 RA operation.

Meanwhile, in the case of the channel access type 1, which may be used regardless of the channel occupancy time (COT) configuration, DL transmission may be performed based on the procedure shown in Table 12 to Table 13.

[Table 12]

The eNB/gNB may transmit a transmission after first sensing the channel to be idle during the sensing slot durations of a defer duration $T_d$ and after the counter N is zero in step 4. The counter N is adjusted by sensing the channel for additional sensing slot duration(s) according to the steps below:

1) set $N = N_{init}$, where $N_{init}$ is a random number uniformly distributed between 0 and $CW_p$, and go to step 4;

2) if $N > 0$ and the eNB/gNB chooses to decrement the counter, set $N = N - 1$;

3) sense the channel for an additional sensing slot duration, and if the additional sensing slot duration is idle, go to step 4; else, go to step 5;

4) if $N = 0$, stop; else, go to step 2.

5) sense the channel until either a busy sensing slot is detected within an additional defer duration $T_d$ or all the sensing slots of the additional defer duration $T_d$ are detected to be idle;

6) if the channel is sensed to be idle during all the sensing slot durations of the additional defer duration $T_d$, go to step 4; else, go to step 5;

(continued)

| |
|---|
| If an eNB/gNB has not transmitted a transmission after step 4 in the procedure above, the eNB/gNB may transmit a transmission on the channel, if the channel is sensed to be idle at least in a sensing slot duration $T_{sl}$ when the eNB/gNB is ready to transmit and if the channel has been sensed to be idle during all the sensing slot durations of a defer duration $T_d$ immediately before this transmission. If the channel has not been sensed to be idle in a sensing slot duration $T_{sl}$ when the eNB/gNB first senses the channel after it is ready to transmit or if the channel has been sensed to be not idle during any of the sensing slot durations of a defer duration $T_d$ immediately before this intended transmission, the eNB/gNB proceeds to step 1 after sensing the channel to be idle during the sensing slot durations of a defer duration $T_d$. |
| The defer duration $T_d$ consists of duration $T_f$ = 16us immediately followed by $m_p$ consecutive sensing slot durations $T_{sl}$, and $T_f$ includes an idle sensing slot duration $T_{sl}$ at start of $T_f$. |

[Table 13]

| |
|---|
| If a gNB transmits transmissions including PDSCH that are associated with channel access priority class p on a channel, the gNB maintains the contention window value $CW_p$ and adjusts $CW_p$ before step 1 of the procedure described in clause 4.1.1 for those transmissions using the following steps: |
|     1) For every priority class $p \in \{1,2,3,4\}$, set $CW_p = CW_{min,p}$. |
|     2) If HARQ-ACK feedback is available after the last update of $W_p$, go to step 3. Otherwise, if the gNB transmission after procedure described in clause 4.1.1 does not include a retransmission or is transmitted within a duration $T_w$ from the end of the *reference duration* corresponding to the earliest DL channel occupancy after the last update of $CW_p$, go to step 5; otherwise go to step 4. |
|     3) The HARQ-ACK feedback(s) corresponding to PDSCH(s) in the reference duration for the latest DL channel occupancy for which HARQ-ACK feedback is available is used as follows: |
|                 a. If at least one HARQ-ACK feedback is 'ACK' for PDSCH(s) with transport block based feedback or at least 10% of HARQ-ACK feedbacks is 'ACK' for PDSCH CBGs transmitted at least partially on the channel with code block group based feedback, go to step 1; otherwise go to step 4. |
|     4) Increase $CW_p$ for every priority class $p \in \{1,2,3,4\}$ to the next higher allowed value. |
|     5) For every priority class $p \in \{1,2,3,4\}$, maintain $CW_p$ as it is; go to step 2. |
| The *reference duration* and duration $T_w$ in the procedure above are defined as follows: |
|     - The *reference duration* corresponding to a channel occupancy initiated by the gNB including transmission of PDSCH(s) is defined in this clause as a duration starting from the beginning of the channel occupancy until the end of the first slot where at least one unicast PDSCH is transmitted over all the resources allocated for the PDSCH, or until the end of the first transmission burst by the gNB that contains unicast PDSCH(s) transmitted over all the resources allocated for the PDSCH, whichever occurs earlier. If the channel occupancy includes a unicast PDSCH, but it does not include any unicast PDSCH transmitted over all the resources allocated for that PDSCH, then, the duration of the first transmission burst by the gNB within the channel occupancy that contains unicast PDSCH(s) is the *reference duration* for CWS adjustment. |
|     - $T_w = max(T_A, T_B + 1ms)$ where $T_B$ is the duration of the transmission burst from start of the *reference duration* in ms and $T_A$ = 5ms if the absence of any other technology sharing the channel can not be guaranteed on a long-term basis (e.g. by level of regulation), and $T_A$ = 10ms otherwise. |
| If a gNB transmits transmissions using Type 1 channel access procedures associated with the channel access priority class p on a channel and the transmissions are not associated with explicit HARQ-ACK feedbacks by the corresponding UE(s), the gNB adjusts $CW_p$ before step 1 in the procedures described in subclase 4.1.1, using the latest $CW_p$ used for any DL transmissions on the channel using Type 1 channel access procedures associated with the channel access priority class $p$. |
| If the corresponding channel access priority class p has not been used for any DL transmissions on the channel, $CW_p = CW_{min,p}$ is used. |

Meanwhile, for the channel access type 1, which may be used regardless of the channel occupancy time (COT) configuration, UL transmission may be performed based on the procedure shown in Table 14 to Table 15.

[Table 14]

A UE may transmit the transmission using Type 1 channel access procedure after first sensing the channel to be idle during the slot durations of a defer duration $T_d$, and after the counter $N$ is zero in step 4. The counter $N$ is adjusted by sensing the channel for additional slot duration(s) according to the steps described below.

1) set $N = N_{init}$, where $N_{init}$ is a random number uniformly distributed between 0 and $CW_p$, and go to step 4;

2) if $N > 0$ and the UE chooses to decrement the counter, set $N = N - 1$;

3) sense the channel for an additional slot duration, and if the additional slot duration is idle, go to step 4; else, go to step 5;

4) if $N = 0$, stop; else, go to step 2.

5) sense the channel until either a busy slot is detected within an additional defer duration $T_d$ or all the slots of the additional defer duration $T_d$ are detected to be idle;

6) if the channel is sensed to be idle during all the slot durations of the additional defer duration $T_d$, go to step 4; else, go to step 5;

If a UE has not transmitted a UL transmission on a channel on which UL transmission(s) are performed after step 4 in the procedure above, the UE may transmit a transmission on the channel, if the channel is sensed to be idle at least in a sensing slot duration $T_{sl}$ when the UE is ready to transmit the transmission and if the channel has been sensed to be idle during all the slot durations of a defer duration $T_d$ immediately before the transmission. If the channel has not been sensed to be idle in a sensing slot duration $T_{sl}$ when the UE first senses the channel after it is ready to transmit, or if the channel has not been sensed to be idle during any of the sensing slot durations of a defer duration $T_d$ immediately before the intended transmission, the UE proceeds to step 1 after sensing the channel to be idle during the slot durations of a defer duration $T_d$.

The defer duration $T_d$ consists of duration $T_f = 16us$ immediately followed by $m_p$ consecutive slot durations where each slot duration is $T_{sl} = 9us$, and $T_f$ includes an idle slot duration $T_{sl}$ at start of $T_f$.

[Table 15]

If a UE transmits transmissions using Type 1 channel access procedures that are associated with channel access priority class p on a channel, the UE maintains the contention window value $CW_p$ and adjusts $CW_p$ for those transmissions before step 1 of the procedure described in clause 4.2.1.1, using the following steps:

1) For every priority class $p \in \{1,2,3,4\}$, set $CW_p = CW_{min,p}$;

2) If HARQ-ACK feedback is available after the last update of $CW_p$, go to step 3. Otherwise, if the UE transmission after procedure described in clause 4.2.1.1 does not include a retransmission or is transmitted within a duration $T_w$ from the end of the *reference duration* corresponding to the earliest UL channel occupancy after the last update of $CW_p$, go to step 5; otherwise go to step 4.

3) The HARQ-ACK feedback(s) corresponding to PUSCH(s) in the *reference duration* for the latest UL channel occupancy for which HARQ-ACK feedback is available is used as follows:

a. If at least one HARQ-ACK feedback is 'ACK' for PUSCH(s) with transport block (TB) based feedback or at least 10% of HARQ-ACK feedbacks are 'ACK' for PUSCH CBGs transmitted at least partially on the channel with code block group (CBG) based feedback, go to step 1; otherwise go to step 4.

4) Increase $CW_p$ for every priority class $p \in \{1,2,3,4\}$ to the next higher allowed value;

5) For every priority class $p \in \{1,2,3,4\}$, maintain $CW_p$ as it is; go to step 2.

The HARQ-ACK feedback, *reference duration* and duration $T_w$ in the procedure above are defined as the following:

(continued)

| |
|---|
| - For the purpose of contention window adjustment in this clause, HARQ-ACK feedback for PUSCH(s) transmissions are expected to be provided to UE(s) explicitly or implicitly where explicit HARQ-ACK is determined based on the valid HARQ-ACK feedback in a corresponding CG-DFI as described in clause 10.5 in [7], and implicit HARQ-ACK feedback is determined based on the indication for a new transmission or retransmission in the DCI scheduling PUSCH(s) as follows:<br><br>    - If a new transmission is indicated, 'ACK' is assumed for the transport blocks or code block groups in the corresponding PUSCH(s) for the TB-based and CBG-based transmission, respectively.<br>    - If a retransmission is indicated for TB-based transmissions, 'NACK' is assumed for the transport blocks in the corresponding PUSCH(s).<br>    - If a retransmission is indicated for CBG-based transmissions, if a bit value in the code block group transmission information (CBGTI) field is '0' or '1' as described in clause 5.1.7.2 in [8], 'ACK' or 'NACK' is assumed for the corresponding CBG in the corresponding PUSCH(s), respectively.<br><br>- The *reference duration* corresponding to a channel occupancy initiated by the UE including transmission of PUSCH(s) is defined in this clause as a duration starting from the beginning of the channel occupancy until the end of the first slot where at least one PUSCH is transmitted over all the resources allocated for the PUSCH, or until the end of the first transmission burst by the UE that contains PUSCH(s) transmitted over all the resources allocated for the PUSCH, whichever occurs earlier. If the channel occupancy includes a PUSCH, but it does not include any PUSCH transmitted over all the resources allocated for that PUSCH, then, the duration of the first transmission burst by the UE within the channel occupancy that contains PUSCH(s) is the *reference duration* for CWS adjustment.<br>- $T_w = \max(T_A, T_B + 1ms)$ where $T_B$ is the duration of the transmission burst from start of the *reference duration* in ms and $T_A = 5ms$ if the absence of any other technology sharing the channel cannot be guaranteed on a long-term basis (e.g. by level of regulation), and $T_A = 10ms$ otherwise. |

Meanwhile, the channel access type 2, which is a simplified channel access type, may be used within a channel occupancy time (COT) before transmission, and DL transmission may be performed based on the procedure shown in Table 16.

[Table 16]

| |
|---|
| 4.1.2 Type 2 DL channel access procedures |
| This clause describes channel access procedures to be performed by an eNB/gNB where the time duration spanned by sensing slots that are sensed to be idle before a downlink transmission(s) is deterministic. |
| If an eNB performs Type 2 DL channel access procedures, it follows the procedures described in clause 4.1.2.1. Type 2A channel access procedures as described in clause 4.1.2.1 are only applicable to the following transmission(s) performed by an eNB/gNB:<br><br>    - Transmission(s) initiated by an eNB including discovery burst and not including PDSCH where the transmission(s) duration is at most 1*ms*, or<br>    - Transmission(s) initiated by a gNB with only discovery burst or with discovery burst multiplexed with non-unicast information, where the transmission(s) duration is at most 1*ms*, and the discovery burst duty cycle is at most 1/20, or<br>    - Transmission(s) by an eNB/ gNB following transmission(s) by a UE after a gap of 25*us* in a shared channel occupancy as described in clause 4.1.3. |
| Type 2B or Type 2C DL channel access procedures as described in clause 4.1.2.2 and 4.1.2.3, respectively, are applicable to the transmission(s) performed by a gNB following transmission(s) by a UE after a gap of 16us or up to 16us, respectively, in a shared channel occupancy as described in clause 4.1.3. |
| 4.1.2.1 Type 2A DL channel access procedures |

(continued)

| |
|---|
| An are eNB/gNB may transmit a DL transmission immediately after sensing the channel to be idle for at least a sensing interval $T_{short\_dl}$ = 25us. $T_{short\_dl}$ consists of a duration $T_f$ = 16$us$ immediately followed by one sensing slot and $T_f$ includes a sensing slot at start of $T_f$. The channel is considered to be idle for $T_{short\_dl}$ if both sensing slots of $T_{short\_dl}$ sensed to be idle. |
| 4.1.2.2 Type 2B DL channel access procedures |
| A gNB may transmit a DL transmission immediately after sensing the channel to be idle within a duration of $T_f$ = 16$us$. $T_f$ includes a sensing slot that occurs within the last 9us of $T_f$. The channel is considered to be idle within the duration $T_f$ if the channel is sensed to be idle for a total of at least 5$us$ with at least 4us of sensing occurring in the sensing slot. |
| 4.1.2.3 Type 2C DL channel access procedures |
| When a gNB follows the procedures in this clause for transmission of a DL transmission, the gNB does not sense the channel before transmission of the DL transmission. The duration of the corresponding DL transmission is at most 584$us$. |

Meanwhile, the channel access type 2, which is a simplified channel access type, may be used within a channel occupancy time (COT) before transmission, and UL transmission may be performed based on the procedure shown in Table 17.

[Table 17]

| |
|---|
| 4.2.1.2 Type 2 UL channel access procedure |
| This clause describes channel access procedures by UE where the time duration spanned by the sensing slots that are sensed to be idle before a UL transmission(s) is deterministic. |
| If a UE is indicated by an eNB to perform Type 2 UL channel access procedures, the UE follows the procedures described in clause 4.2.1.2.1. |
| 4.2.1.2.1 Type 2A UL channel access procedure |
| If a UE is indicated to perform Type 2A UL channel access procedures, the UE uses Type 2A UL channel access procedures for a UL transmission. The UE may transmit the transmission immediately after sensing the channel to be idle for at least a sensing interval $T_{short\_ul}$ = 25$us$. $T_{short\_ul}$ consists of a duration $T_f$ = 16$us$ immediately followed by one sensing slot and $T_f$ includes a sensing slot at start of $T_f$. The channel is considered to be idle for $T_{short\_ul}$ if both sensing slots of $T_{short\_ul}$ are sensed to be idle. |
| 4.2.1.2.2 Type 2B UL channel access procedure |
| If a UE is indicated to perform Type 2B UL channel access procedures, the UE uses Type 2B UL channel access procedure for a UL transmission. The UE may transmit the transmission immediately after sensing the channel to be idle within a duration of $T_f$ = 16$us$. $T_f$ includes a sensing slot that occurs within the last 9us of $T_f$. The channel is considered to be idle within the duration $T_f$ if the channel is sensed to be idle for total of at least 5$us$ with at least 4us of sensing occurring in the sensing slot. |
| 4.2.1.2.3 Type 2C UL channel access procedure |
| If a UE is indicated to perform Type 2C UL channel access procedures for a UL transmission, the UE does not sense the channel before the transmission. The duration of the corresponding UL transmission is at most 584$us$. |

In embodiment(s) of the present disclosure, a TYPE 2A SL channel access may be in the same manner as the TYPE 2A DL and/or UL channel access. For example, the TYPE 2A SL channel access may be performed in a sensing interval T_short_sl=25us, where the interval may consist of a duration T_f=16us immediately followed by one sensing slot and T_f may include a sensing slot at start of T_f. The basic IDLE determination in the TYPE 2A SL channel access may also borrow IDLE determination from the DL or UL channel access.

In embodiment(s) of the present disclosure, a TYPE 2B SL channel access may be in the same manner as the TYPE 2B DL and/or UL channel access. For example, in the case of the TYPE 2B SL channel access, the UE may perform transmission immediately after sensing a channel to be idle within a duration of T_f=16us. T_f may include a sensing slot that occurs within the last 9us of T_f. The basic IDLE determination in the TYPE 2B SL channel access may also borrow IDLE determination from the DL or UL channel access.

In embodiment(s) of the present disclosure, a TYPE 2C SL channel access may be in the same manner as the TYPE 2C DL and/or UL channel access. For example, in the case of the TYPE 2C SL channel access, the UE may not perform channel sensing. Instead, the time duration of SL transmission may be at most 584us.

In embodiment(s) of the present disclosure, a TYPE 1 SL channel access may be in the same manner as the TYPE 1 DL and/or UL channel access. For example, the UE may randomly derive an integer value N based on a contention window size corresponding to a priority class. Then, if a channel sensing result for a defer duration T_d corresponding to the priority class is idle, the UE may decrease the N-1 counter value in units of T_sl when IDLE. If the value of the counter is zero, the UE may occupy the RB set or the channel subject to channel sensing. If a part of a channel sensing result for the T_sl duration is determined to be busy, the UE may keep the counter value until a channel sensing result for the defer duration T_d is idle, and the UE may continue to perform channel sensing. In the above, the defer duration T_d may consist of T_f=16us and contiguous m_p * T_sl after T_f=16us, where m_p may be a value determined by the priority class (p), and T_sl=9us may be a time interval in which channel sensing is performed.

Hereinafter, a channel access priority class (CAPC) is described.

The CAPCs of MAC CEs and radio bearers may be fixed or configured to operate in FR1:

- Fixed to lowest priority for padding buffer status report (BSR) and recommended bit rate MAC CE;
- Fixed to highest priority for SRB0, SRB1, SRB3 and other MAC CEs;
- Configured by the base station for SRB2 and DRB.

When selecting a CAPC of a DRB, the base station considers fairness between other traffic types and transmissions while considering 5QI of all QoS flows multiplexed to the corresponding DRB. Table 18 shows which CAPC should be used for standardized 5QI, that is, a CAPC to be used for a given QoS flow. For standardized 5QI, CAPCs are defined as shown in the table below, and for non-standardized 5QI, the CAPC with the best QoS characteristics should be used.

[Table 18]

| CAPC | 5QI |
|---|---|
| 1 | 1, 3, 5, 65, 66, 67, 69, 70, 79, 80, 82, 83, 84, 85 |
| 2 | 2, 7, 71 |
| 3 | 4, 6, 8, 9, 72, 73, 74, 76 |
| 4 | - |
| NOTE: A lower CAPC value indicates a higher priority. | |

Table 19 shows that $m_p$, a minimum contention window (CW), a maximum CW, a maximum channel occupancy time (MCOT), and an allowed CW size vary depending on channel access priority classes, in DL.

[Table 19]

| Channel Access Priority Class (p) | $m_p$ | $CW_{min,p}$ | $CW_{max,p}$ | $T_{mcot,p}$ | allowed $CW_p$ sizes |
|---|---|---|---|---|---|
| 1 | 1 | 3 | 7 | 2 ms | {3,7} |
| 2 | 1 | 7 | 15 | 3 ms | {7,15} |
| 3 | 3 | 15 | 63 | 8 or 10 ms | {15,31,63} |
| 4 | 7 | 15 | 1023 | 8 or 10 ms | {15,31,63,127,255,511,1023} |

Referring to Table 19, a contention window size (CWS), a maximum COT value, etc. for each CAPC may be defined. For example, $T_d$ may be equal to $T_f + m_p * T_{sl}$ ($T_d = T_f + m_p * T_{sl}$).

Table 20 shows that $m_p$, a minimum contention window (CW), a maximum CW, a maximum channel occupancy time (MCOT), and an allowed CW size vary depending on channel access priority classes, in UL.

[Table 20]

| Channel Access Priority Class (p) | $m_p$ | $CW_{min,p}$ | $CW_{max,p}$ | $T_{ulmcot,p}$ | allowed $CW_p$ sizes |
|---|---|---|---|---|---|
| 1 | 2 | 3 | 7 | 2 ms | {3,7} |
| 2 | 2 | 7 | 15 | 4 ms | {7,15} |
| 3 | 3 | 15 | 1023 | 6 or 10 ms | {15,31,63,127,255,511,1023} |

(continued)

| Channel Access Priority Class (p) | $m_p$ | $CW_{min,p}$ | $CW_{max,p}$ | $T_{ulmcot,p}$ | allowed $CW_p$ sizes |
|---|---|---|---|---|---|
| 4 | 7 | 15 | 1023 | 6 or 10 ms | {15,31,63,127,255,511,1023} |

Referring to Table 20, a contention window size (CWS), a maximum COT value, etc. for each CAPC may be defined. For example, $T_d$ may be equal to $T_f + m_p * T_{sl}$ ($T_d = T_f + m_p * T_{sl}$).

In embodiment(s) of the present disclosure, the UE may not be ready to transmit sidelink transmission while the UE has occupied a channel through the TYPE 1 SL channel access. In this case, the UE may configure a defer duration of length T_d and a sensing duration of length T_sl immediately before the sidelink transmission that it is ready to transmit. Herein, if both are idle, the UE may immediately perform the sidelink transmission, but if at least one of the defer duration and the sensing duration is busy, the UE may again perform the TYPE 1 SL channel access. For example, if the sidelink transmission is not possible at a time when channel sensing ends (e.g., if the end of the channel sensing is after the start of the sidelink transmission), the UE may reselect sidelink transmission resource(s). For example, the reselected resource may be selected by considering the end time of the channel sensing and/or the length of the remaining sensing interval, etc. For example, the remaining sensing interval may be a value derived from assuming that all channel sensing is idle.

Hereinafter, UE procedure for determining the subset of resources to be reported to higher layers in PSSCH resource selection in sidelink resource allocation mode 2 will be described.

In resource allocation mode 2, the higher layer can request the UE to determine a subset of resources from which the higher layer will select resources for PSSCH/PSCCH transmission. To trigger this procedure, in slot n, the higher layer provides the following parameters for this PSSCH/PSCCH transmission:

- the resource pool from which the resources are to be reported;
- L1 priority, $prio_{TX}$;
- the remaining packet delay budget;
- the number of sub-channels to be used for the PSSCH/PSCCH transmission in a slot, $L_{subCH}$;
- optionally, the resource reservation interval, $P_{rsvp\_TX}$, in units of msec.
- if the higher layer requests the UE to determine a subset of resources from which the higher layer will select resources for PSSCH/PSCCH transmission as part of re-evaluation or pre-emption procedure, the higher layer provides a set of resources $(r_0, r_1, r_2, ...)$ which may be subject to re-evaluation and a set of resources $(r'_0, r'_1, r'_2, ...)$ which may be subject to pre-emption.
- it is up to UE implementation to determine the subset of resources as requested by higher layers before or after the slot $r_i" - T_3$, where $r_i"$ is the slot with the smallest slot index among $(r_0, r_1, r_2, ...)$ and $(r'_0, r'_1, r'_2, ...)$, and $T_3$ is equal to $T^{SL}_{proc,1}$. Herein, $T^{SL}_{proc,1}$ is defined as the number of slots determined based on the SCS configuration of the SL BWP, where $\mu_{SL}$ is the SCS configuration of the SL BWP.

The following higher layer parameters affect this procedure:

- sl-SelectionWindowList: internal parameter $T_{2min}$ is set to the corresponding value from higher layer parameter sl-SelectionWindowList for the given value of $prio_{TX}$.
- sl-Thres-RSRP-List: this higher layer parameter provides an RSRP threshold for each combination $(p_i, p_j)$, where $p_i$ is the value of the priority field in a received SCI format 1-A and $p_j$ is the priority of the transmission of the UE selecting resources; for a given invocation of this procedure, $p_j = prio_{TX}$.
- sl-RS-ForSensing selects if the UE uses the PSSCH-RSRP or PSCCH-RSRP measurement.
- sl-ResourceReservePeriodList
- sl-SensingWindow: internal parameter $T_0$ is defined as the number of slots corresponding to sl-SensingWindow msec.
- sl-TxPercentageList: internal parameter X for a given $prio_{TX}$ is defined as sl-TxPercentageList $(prio_{TX})$ converted from percentage to ratio.
- sl-PreemptionEnable: if sl-PreemptionEnable is provided, and if it is not equal to 'enabled', internal parameter $prio_{pre}$ is set to the higher layer provided parameter sl-PreemptionEnable.

The resource reservation interval, $P_{rsvp\_TX}$, if provided, is converted from units of msec to units of logical slots, resulting in $P'_{rsvp\_TX}$.

Notation:

$(t'^{SL}_0, t'^{SL}_1, t'^{SL}_2, ...)$ denotes the set of slots which belongs to the sidelink resource pool.

For example, the UE may select a set of candidate resources $(S_A)$ based on Table 21. For example, if resource (re)selection is triggered, the UE may select a set of candidate resources ($S_A$) based on Table 21. For example, if re-evaluation or pre-emption is triggered, the UE may select a set of candidate resources ($S_A$) based on Table 21.

[Table 21]

The following steps are used:

1) A candidate single-slot resource for transmission $R_{x,y}$ is defined as a set of $L_{subCH}$ contiguous sub-channels with sub-channel $x+j$ in slot $t'^{SL}_y$ where $j = 0,...,L_{subCH}$ - 1. The UE shall assume that any set of $L_{subCH}$ contiguous sub-channels included in the corresponding resource pool within the time interval [$n + T_1$, $n + T_2$] correspond to one candidate single-slot resource, where

- selection of $T_1$ is up to UE implementation under $0 \leq T_1 \leq T^{SL}_{proc,1}$, where $T^{SL}_{proc,1}$ is defined in slots in Table 8.1.4-2 where $\mu_{SL}$ is the SCS configuration of the SL BWP;
- if $T_{2min}$ is shorter than the remaining packet delay budget (in slots) then $T_2$ is up to UE implementation subject to $T_{2min} \leq T_2 \leq$ remaining packet delay budget (in slots); otherwise $T_2$ is set to the remaining packet delay budget (in slots).
The total number of candidate single-slot resources is denoted by $M_{total}$.

2) The sensing window is defined by the range of slots $[n - T_0, n - T^{SL}_{proc,0})$ where $T_0$ is defined above and $T^{SL}_{proc,0}$ is defined in slots in Table 8.1.4-1 where $\mu_{SL}$ is the SCS configuration of the SL BWP. The UE shall monitor slots which belongs to a sidelink resource pool within the sensing window except for those in which its own transmissions occur. The UE shall perform the behaviour in the following steps based on PSCCH decoded and RSRP measured in these slots.

3) The internal parameter $Th(p_i,p_j)$ is set to the corresponding value of RSRP threshold indicated by the i-th field in *sl-Thres-RSRP-List*, where $i = p_i + (p_j - 1) * 8$.

4) The set $S_A$ is initialized to the set of all the candidate single-slot resources.

5) The UE shall exclude any candidate single-slot resource $R_{x,y}$ from the set $S_A$ if it meets all the following conditions:

- the UE has not monitored slot $t'^{SL}_m$ in Step 2.
- for any periodicity value allowed by the higher layer parameter *sl-ResourceReservePeriodList* and a hypothetical SCI format 1-A received in slot $t'^{SL}_m$ with 'Resource reservation period field set to that periodicity value and indicating all subchannels of the resource pool in this slot, condition c in step 6 would be met.

5a) If the number of candidate single-slot resources $R_{x,y}$ remaining in the set $S_A$ is smaller than $X \cdot M_{total}$, the set $S_A$ is initialized to the set of all the candidate single-slot resources as in step 4.

6) The UE shall exclude any candidate single-slot resource $R_{x,y}$ from the set $S_A$ if it meets all the following conditions:

a) the UE receives an SCI format 1-A in slot $t'^{SL}_m$, and 'Resource reservation period' field, if present, and 'Priority' field in the received SCI format 1-A indicate the values $P_{rsvp\_RX}$ and *prio_{RX}*, respectively;

b) the RSRP measurement performed, for the received SCI format 1-A, is higher than $Th(prio_{RX},prio_{TX})$;

c) the SCI format received in slot $t'^{SL}_m$ or the same SCI format which, if and only if the 'Resource reservation period field is present in the received SCI format 1-A, is assumed to be received in slot(s) $t'^{SL}_{m+q \times P'_{rsvp\_RX}}$ determines the set of resource blocks and slots which overlaps with $R_{x,y+j \times P'_{rsvp\_TX}}$ for q=1, 2, ..., Q and j=0, 1, ..., $C_{resel}$ - 1. Here, $P'_{rsvp\_RX}$ is $P_{rsvp\_RX}$ converted to units of logical slots,

$Q = \left\lceil \frac{T_{scal}}{P_{rsvp\_RX}} \right\rceil$ if $P_{rsvp\_RX} < T_{scal}$ and $n' - m \leq P'_{rsvp\_RX}$, where $t'^{SL}_{n'} = n$ if slot $n$ belongs to the set ($t'^{SL}_0, t'^{SL}_1, ..., t'^{SL}_{T'_{max}-1}$), otherwise slot $t'^{SL}_{n'}$ is the first slot after slot $n$ belonging to the set ($t'^{SL}_0, t'^{SL}_1, ..., t'^{SL}_{T'_{max}-1}$); otherwise Q = 1. $T_{scal}$ is set to selection window size $T_2$ converted to units of msec.

7) If the number of candidate single-slot resources remaining in the set $S_A$ is smaller than $X \cdot M_{total}$, then $Th(p_i,p_j)$ is increased by 3 dB for each priority value $Th(p_i,p_j)$ and the procedure continues with step 4.

The UE shall report set $S_A$ to higher layers.

If a resource $r_i$ from the set ($r_0,r_1,r_2,...$) is not a member of $S_A$, then the UE shall report re-evaluation of the resource $r_i$ to higher layers.

(continued)

If a resource $r_i'$ from the set ( $r_0', r_1', r_2', ...$ ) meets the conditions below then the UE shall report pre-emption of the resource $r_i'$ to higher layers

- $r_i'$ is not a member of $S_A$, and

- $r_i'$ meets the conditions for exclusion in step 6, with $Th(prio_{RX}, prio_{TX})$ set to the final threshold after executing steps 1)-7), i.e. including all necessary increments for reaching $X \cdot M_{total}$, and
- the associated priority $prio_{RX}$, satisfies one of the following conditions:
    - sl-PreemptionEnable is provided and is equal to 'enabled' and $prio_{TX} > prio_{RX}$
    - sl-PreemptionEnable is provided and is not equal to 'enabled', and $prio_{RX} < prio_{pre}$ and $prio_{TX} > prio_{RX}$

Meanwhile, as part of an effort to reduce overhead due to a channel access operation, the transmitting node may perform contiguous transmissions so that the gap between transmissions is less than or equal to a certain level, and the transmitting node may omit a channel sensing operation in the middle of transmissions for the same transmission burst (the contiguous transmissions).

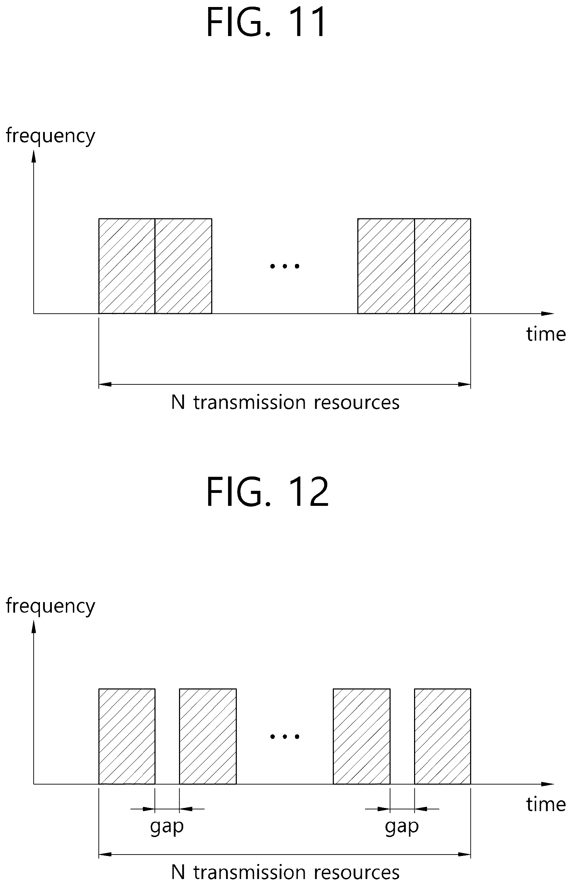

FIG. 11 shows an example of N transmission resources, based on an embodiment of the present disclosure. The embodiment of FIG. 11 may be combined with various embodiments of the present disclosure.

Referring to FIG. 11, as part of an effort to reduce overhead due to a channel access operation, the transmitting node may perform contiguous transmissions using N transmission resources, and the transmitting node may skip a channel sensing operation in the middle of transmissions for the same transmission burst (the contiguous transmissions).

FIG. 12 shows an example of N transmission resources, based on an embodiment of the present disclosure. The embodiment of FIG. 12 may be combined with various embodiments of the present disclosure.

Referring to FIG. 12, as part of an effort to reduce overhead due to a channel access operation, the transmitting node may perform contiguous transmissions using N transmission resources so that the gap between transmissions is less than or equal to a certain level, and the transmitting node may skip a channel sensing operation in the middle of transmissions for the same transmission burst (the contiguous transmissions).

Meanwhile, if a UE performs transmission in a period in which a channel access procedure by another UE is performed, the channel access procedure by another UE may fail due to the transmission. For example, a resource selected/reserved for the transmission by the UE may block the channel access by another UE, which may lead to problems such as inefficient use of resources in the unlicensed band and delay in communication in the unlicensed band.

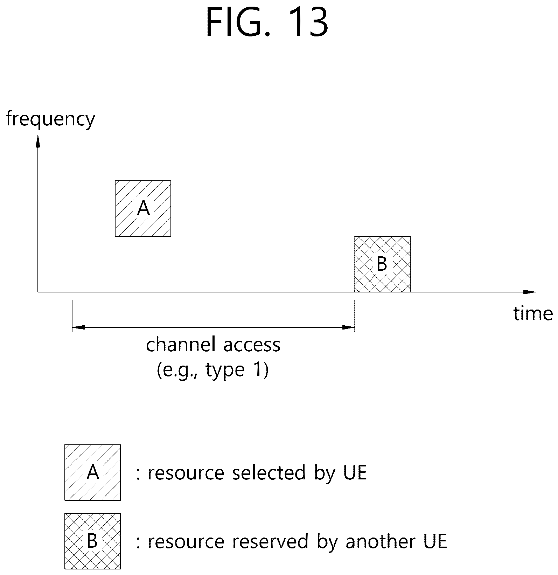

FIG. 13 shows an example in which transmission on a resource selected by a UE blocks channel access by another UE. The embodiment of FIG. 13 may be combined with various embodiments of the present disclosure.

Referring to FIG. 13, another UE may reserve the resource B, and the UE may detect that the resource B is reserved by another UE through sensing (e.g., SCI monitoring). In this case, the UE may select a transmission resource from among the remaining candidate resources excluding the resource B. In the embodiment of FIG. 13, it is assumed that the UE selects/reserves the resource A and performs transmission on the resource A. In this case, channel access performed by another UE may fail due to the transmission on the resource A, and another UE may not perform transmission on the resource B due to failure of channel access. In particular, in the case of channel access type 1, since the time for channel access is relatively long, the above-described problem may occur frequently.

Based on various embodiments of the present disclosure, a method for performing COT sharing and a device supporting the same are proposed.

For example, when the UE reserves resources for the same TB, the resources selected for PSSCH may be restricted to exist within a single or multiple consecutive (sidelink) slots and/or within the same RB set(s).

For example, when the UE performs a single resource (re)selection procedure for periodic resource reservation, the resources selected for PSSCH may be restricted to exist within a single or multiple consecutive (sidelink) slots and/or within the same RB set(s).

Meanwhile, a candidate single-slot resource, which is a basic unit of available resources and selected resources in the resource (re)selection procedure, may represent a single slot and a lowest subchannel in terms of frequency for a PSSCH transmission resource including a single or multiple subchannels. For example, when the UE performs the resource (re)selection procedure, the UE may use a candidate multi-slot resource, which is extended to a plurality of N slots, as a basic unit of available resources and/or selected resources. The candidate multi-slot resource may represent a specific slot group including the N slots and a lowest subchannel in terms of frequency for a PSSCH transmission resource including a single or multiple subchannels. For example, when the UE performs the resource (re)selection procedure, multiple slots included in a resource selection window may be partitioned into the N slots and/or divided into slot groups including at most N slots. For example, a group including N slots may be formed from the start of the resource selection window. For example, a group including N slots may be formed from the first sidelink slot belonging to a resource pool within a 10240 msec period, DFN0, or SFN0. For example, the candidate multi-slot resource may represent each slot group. For example, the value of N may be different and/or (pre-)configured for each resource pool and/or for each transmission SL priority value for PSSCH transmission and/or for each CAPC value for PSSCH transmission and/or for each CAPC table for PSSCH transmission and/or for each congestion control level and/or for each QoS parameter and/or for each (remaining) packet delay budget (PDB) for PSSCH transmission and/or for each (remaining) COT duration length.

For example, when performing the resource (re)selection procedure based on the unit of the candidate multi-slot resource, if the PSSCH transmission group resource corresponding to the candidate multi-slot resource overlaps with a reserved resource of another UE and/or if the RSRP measurement value for the reserved resource is greater than or equal to an RSRP threshold, the UE may exclude the candidate multi-slot resource from the set of available resources. For example, in the above, exceptionally, if the overlapping ratio with the reserved resource in the time domain and/or the frequency domain is less than or equal to a certain level and/or if the average RSRP measurement value for the PSSCH transmission resource group corresponding to the candidate multi-slot resource is less than or equal to a certain level, the UE may include the candidate multi-slot resource in the set of available resources. For example, when performing the resource (re)selection procedure based on the unit of the candidate multi-slot resource, if the PSSCH transmission group resource corresponding to the candidate multi-slot resource overlaps with an excluded resource derived from a non-monitored slot of the UE, the UE may exclude the candidate multi-slot resource from the set of available resources. For example, when performing the resource (re)selection procedure based on the unit of the candidate multi-slot resource, the UE may limit the size of the resource selection window and/or the minimum value (T _2,min) and/or the maximum value of the size of the resource selection window to be a multiple of the N.

For example, when the sidelink resource is allocated based on the unit of the candidate multi-slot resource in the mode 1 resource selection procedure, the slot offset indicating the time position of the first sidelink resource may be extended to an offset indicating the number of slot groups.

For example, if the basic unit of the PSSCH transmission resource is the candidate multi-slot resource, the (maximum) number of transmissions for a single TB may be extended to the number of PSSCH transmission groups. For example, in this case, if a part of the PSSCH transmission group is dropped, the PSSCH transmission group may not be included in the number of transmissions for a single TB. For example, in this case, if a part of the PSSCH transmission group is dropped and/or the single PSSCH transmission group is divided into multiple PSSCH transmission groups, each of the divided PSSCH transmission subgroups may be included in the number of transmissions for a single TB. For example, if the basic unit of the PSSCH transmission resource is the candidate multi-slot resource, the maximum number of transmissions for a single TB may be a value less than or equal to a value obtained by multiplying 32 by N. For example, if the basic unit of the PSSCH transmission resource is the candidate multi-slot resource, the maximum number of transmissions for a single TB may be a value obtained by multiplying the maximum number of transmissions (pre-)configured based on the candidate multi-slot resource by N. For example, if the UE fails to perform PSCCH/PSSCH transmission due to LBT failure, the dropped PSSCH transmission may not be included in the number of transmissions for a single TB. The rationale for this is to ensure TB performance since TB transmission was not actually performed. For example, if the UE fails to perform PSCCH/PSSCH transmission due to LBT failure, the dropped PSSCH transmission may be included in the number of transmissions for a single TB. The advantage of this is to reduce power consumption through frequent transmission attempts for the same TB even if the UE loses a transmission opportunity due to LBT. For example, when the UE performs the resource (re)selection procedure using the candidate multi-slot resource as the basic unit, the UE may determine whether to boost the RSRP threshold and the set of available resources to be reported to the upper layer based on the ratio of the amount of candidate multi-slot resources in the set of available resources to the amount of all candidate multi-slot resources belonging to the resource selection window. For example, when the UE performs the resource (re)selection procedure using the candidate multi-slot resource as the basic unit, the UE may still check the amount of available resources using the candidate single-slot resource as the basic unit.

For example, in the resource (re)selection procedure, a candidate single-slot resource, which is a basic unit of available resources and selected resources, may include a single or multiple subchannels, and may represent the first or last slot in the PSSCH transmission group and the lowest subchannel in the frequency domain for the PSSCH transmission group resource transmitted through a single or multiple consecutive slots (e.g., the N slots). For example, if the PSSCH transmission group resource corresponding to the candidate single-slot resource overlaps with a reserved resource of another UE and/or the RSRP measurement value for the reserved resource is greater than or equal to an RSRP threshold, the UE may exclude the candidate single-slot resource from the set of available resources. For example, when performing the resource (re)selection procedure using the candidate single-slot resource as the unit, if the PSSCH transmission group resource corresponding to the candidate single-slot resource overlaps with an excluded resource derived from a non-monitored slot of the UE, the UE may exclude the candidate single-slot resource from the set of available resources. For example, if the overlapping ratio with the reserved resource in the time domain and/or the frequency domain is less than or equal to a certain level and/or the average RSRP measurement value for the PSSCH transmission resource group corresponding to the candidate single-slot resource is less than or equal to a certain level, the UE may include the candidate single-slot resource in the set of available resources.

In embodiment(s) of the present disclosure, different PSSCH transmission group candidates may partially overlap with each other in time and/or in frequency. In embodiment(s) of the present disclosure, it may not be allowed for different PSSCH transmission group candidates to partially overlap in time.

For example, the UE may perform resource (re)selection using the candidate single-slot resource as the basic unit. In this case, the UE may ensure that the number of occurrences where candidate single-slot resources within the set of available resources are temporally consecutive for at least N slots and/or where such temporally consecutive candidate single-slot resources exist within the same RB set(s) is greater than or equal to a certain level. For example, the certain level may be (pre-)configured for each N value and/or for each resource pool and/or for each SL transmission priority value and/or for each CAPC table and/or for each CAPC value for PSCCH/PSSCH transmission. For example, the above-mentioned condition may be when the ratio of the number of candidate single-slot resource groups satisfying the above-mentioned condition to the total number of candidate single-slot resources within the resource selection window is greater than or equal to a threshold, which is (pre-)configured for each group size and/or for each N value and/or for each resource pool. For example, the available resources in consecutive slots may be limited to those that actually exist in consecutive physical slots in the physical slot domain. For example, the UE may boost the RSRP threshold to obtain the set of available resources where available resources exist in consecutive slots at a certain level or more. For example, the RSRP threshold may be managed/determined differently for each group size and/or for each N value. For example, the initial value of the RSRP threshold may be (pre-)configured for each group size and/or for each N value.

In embodiment(s) of the present disclosure, for resources on N consecutive slots corresponding to available resources, the value of N may allow multiple values for PSCCH/PSSCH transmission. For example, the PSSCH resource sets derived based on the different values of N may have a mutually overlapping structure. For example, more specifically, the time boundaries between the PSSCH resource sets based on the different values of N may be aligned as much as possible. For example, for the candidate values for the value of N, for example, the UE may perform the resource selection procedure based on an initial N_init value in determining the value of N for PSCCH/PSSCH transmission, and may stop the resource selection procedure based on the N_init value depending on a specific situation, and may perform the resource selection procedure based on the next smaller or larger value of N. For example, the specific situation may be when the number of RSRP threshold boosting is greater than or equal to a certain level (e.g., (pre-)configured value for each resource pool and/or for each N value) and/or when the RSRP threshold is greater than or equal to a certain level (e.g., (pre-)configured value for each resource pool and/or for each N value).

For example, for a group of PSCCH/PSSCH transmission resources mapped to N consecutive slots, the UE may perform actual transmission only in a group of K PSCCH/PSSCH transmission resources (e.g., K is less than and/or equal to N) after successful channel access for the group of PSCCH/PSSCH transmission resources. For example, the value of K may be different for each SL priority and/or for each resource pool and/or for each CAPC value and/or for each HARQ-ACK state for PSCCH/PSSCH and/or for each QoS parameter and/or for each congestion control level. For example, the value of K may be (pre-)configured for each SL priority and/or for each resource pool and/or for each CAPC value and/or for each HARQ-ACK state for PSCCH/PSSCH and/or for each QoS parameter and/or for each congestion control level. For example, the value of K may be determined as the number of PSCCH/PSSCH transmission resources from the time when the UE succeeds in channel access to the time when the UE receives HARQ-ACK for PSCCH/PSSCH transmitted by the UE. The value of K may be determined as the number of PSCCH/PSSCH transmission resources from the time when the UE succeeds in channel access to the time when the UE receives or determines ACK for PSCCH/PSSCH transmitted by the UE.

In embodiment(s) of the present disclosure, when the UE selects resources for PSCCH/PSSCH transmission, if there is a restriction that the time gap between different selected resources shall be at least a certain level (e.g., HARQ round trip time (RTT)) or more, the restriction on the time gap may be extended to apply to the time gap between the end time of the group of PSSCH transmission resources and the start time of the next group of PSSCH transmission resources.

In embodiment(s) of the present disclosure, time-frequency resources corresponding to the candidate multi-slot resource or the candidate single-slot resource may exist in actual consecutive physical slots in the physical resource domain. For example, depending on a logical slot configuration configured in a resource pool, a single or multiple slot gaps may exist between different candidate multi-slot resources or between different candidate single-slot resources. For example, depending on a logical slot configuration configured in a resource pool, the number of configured slots or the size of the group may be different for each of different candidate multi-slot resources or each of different candidate single-slot resources. For example, the UE may generate multiple slot groups based on the value of N for physical slots, and the UE may (identically) derive (time domain) resources corresponding to candidate multi-slot resources or candidate single-slot resources, limited to logical slots belonging to the resource pool, for each slot group.

In embodiment(s) of the present disclosure, the set of available resources S_A including candidate single-slot resources or candidate multi-slot resources is described as being for the same TB or the same grant (periodic resource reservation), but the set of available resources S_A may be extended and applied to multiple TBs or multiple grants (multiple periodic reservation and/or aperiodic reservation). Meanwhile, in the case where the set of available resources S_A corresponds to multiple TBs or grants, a transmission priority value and/or a remaining PDB value and/or a resource selection window size and/or a resource selection window position and/or a position or size of a sensing window and/or a number of subchannels corresponding to a candidate resource and/or a transmission resource reservation period and/or a CAPC value, etc. may be different for each of the multiple TBs or grants. In this case, in the resource selection procedure, it is necessary to determine which resource set corresponds to which candidate single-slot resource and/or candidate multi-slot resource based on which parameter. For example, when generating the set of available resources S_A for multiple TBs or grants, a representative value among the parameters for the multiple TBs or grants may be selected as a transmission priority value and/or a remaining PDB value and/or a resource selection window size and/or a resource selection window position and/or a position or size of a sensing window and/or a number of subchannels corresponding to a candidate resource and/or a transmission resource reservation period that configures or is used to configure S_A. For example, the set of parameters corresponding to the S_A may correspond to a specific TB or grant. For example, the specific TB or grant corresponding to the set of parameters for the S_A may be determined based on a transmission priority value and/or a remaining PDB value and/or a resource selection window size and/or a resource selection window position and/or a position or size of a sensing window and/or a number of subchannels corresponding to a candidate resource and/or a transmission resource reservation period and/or a CAPC value and/or a time at which the TB or grant is available or generated. For example, the specific TB or grant corresponding to the set of parameters for the S_A may have the smallest transmission priority value. For example, the specific TB or grant corresponding to the set of parameters for the S_A may have the largest transmission priority value. For example, the specific TB or grant corresponding to the set of parameters for the S_A may have the largest CAPC value. For example, the specific TB or grant corresponding to the set of parameters for the S_A may have the smallest CAPC value. For example, the specific TB or grant corresponding to the set of parameters for the S_A may have the same CAPC value as the CAPC value for SL burst transmission. For example, the specific TB or grant corresponding to the set of parameters for the S_A may have the earliest generation time. For example, the specific TB or grant corresponding to the set of parameters for the S_A may have the latest generation time.

For example, when generating the set of available resources S_A for multiple TBs or grants, a representative transmission priority value that configures or is used to configure S_A may be selected as the maximum value among the transmission priority values for the multiple TBs or grants. In this case, when performing PSCCH/PSSCH resource selection from S_A in the upper layer of the UE, the situation in which a low priority PSCCH/PSSCH gives high interference to a high priority PSCCH/PSSCH of another UE regardless of the transmission priority may be minimized. For example, when generating the set of available resources S_A for multiple TBs or grants, a representative transmission priority value that configures or is used to configure S_A may be selected as the minimum value among the transmission priority values for the multiple TBs or grants. In this case, it may be advantageous to secure available resources with a low interference level or a large amount of available resources for a high priority PSCCH/PSSCH.

For example, when generating the set of available resources S_A for multiple TBs or grants, a representative remaining PDB value that configures or is used to configure S_A may be selected as the minimum value among the remaining PDB values for the multiple TBs or grants. For example, when generating the set of available resources S_A for multiple TBs or grants, a resource selection window size and/or a resource selection window position that configures or is used to configure S_A may be configured based on a start of a latest resource selection window and/or an end of an earliest resource selection window among the resource selection windows for the multiple TBs or grants. In this case, since the selection window is aligned with the requirement of tight transmission, a separate procedure may not be necessary when performing resource selection resource in the upper layer of the UE. For example, when generating the set of available resources S_A for multiple TBs or grants, a representative remaining PDB value that configures or is used to configure S_A may be selected as the maximum value among the remaining PDB values for the multiple TBs or grants. For example, when generating the set of available resources S_A for multiple TBs or grants, a resource selection window size and/or a resource selection window position that configures or is used to configure S_A may be configured based on a start of an earliest resource selection window and/or an end of a latest resource selection window among the resource selection windows for the multiple TBs or grants. In this case, there may be an advantage of sufficiently securing an amount of available resources for various data or TBs and/or securing a resource with a low interference level as a candidate resource. For example, in this case, when selecting PSCCH/PSSCH resources for multiple TBs or grants from S_A, the UE may select suitable resources based on the remaining PDB and/or the resource selection window for each TB or grant. For example, even if S_A is determined based on a relatively large remaining PDB, the UE may select resources within the remaining PDB for the PSCCH/PSSCH when actually selecting the PSCCH/PSSCH resources.

For example, when generating the set of available resources S_A for multiple TBs or grants, a representative number of subchannels corresponding to candidate resources that configures or is used to configure S_A may be selected as the maximum value among the numbers of subchannels for the multiple TBs or grants. In this case, even if the number of actual transmission subchannels is small, there may be no problem in terms of interference level even if the S_A is used. For example, when generating the set of available resources S_A for multiple TBs or grants, a representative number of subchannels corresponding to candidate resources that configures or is used to configure S_A may be selected as 1 or the minimum value among the numbers of subchannels for the multiple TBs or grants. In this case, there is an advantage of securing a larger amount of available resources when the number of actual transmission subchannels is small. For example, in this case, when selecting PSCCH/PSSCH resources for multiple TBs or grants from S_A, the UE may select suitable resources based on the number of transmission subchannels for each TB or grant. For example, if the representative number of transmission subchannels for S_A is M and the number of transmission subchannels of actual PSCCH/PSSCH transmission is N (>M), and if N-M+1 candidate resources contiguous in the frequency domain exist in S_A, a resource with the lowest frequency in the frequency domain among the N-M+1 candidate resources may be considered as an actual valid candidate resource.

For example, when generating the set of available resources S_A for multiple TBs or grants, a sensing window size and/or a sensing window position that configures or is used to configure S_A may be configured based on a start of an earliest sensing window and/or an end of a latest sensing window among the sensing windows for the multiple TBs or grants. For example, when generating the set of available resources S_A for multiple TBs or grants, potential available slots that configures or is used to configure S_A may be the union of the potential available slots for the multiple TBs or grants. The rationale for this is to maximize the amount of available resources. For example, when generating the set of available resources S_A for multiple TBs or grants, potential available slots that configures or is used to configure S_A may be the intersection of the potential available slots for the multiple TBs or grants. The advantage of this is to minimize power consumption during sensing operation.

For example, when generating the set of available resources S_A for multiple TBs or grants, a transmission resource reservation period that configures or is used to configure S_A may be configured to the minimum value among the transmission resource reservation periods for the multiple TBs or grants. For example, the minimum value among the resource reservation period values may be the minimum value among a specific value (e.g., 100 ms) or more. In this case, resource exclusion may be performed more tightly. Accordingly, even if the actual transmission resource reservation period value is large, there may be less problems with resource conflict or interference level when using the set of available resources as it is. For example, when generating the set of available resources S_A for multiple TBs or grants, a transmission resource reservation period that configures or is used to configure S_A may be configured to the maximum value among the transmission resource reservation periods for the multiple TBs or grants. The basis for this may be maximizing the amount of available resources.

For example, multiple TBs or grants corresponding to the same S_A may be determined based on a transmission priority value and/or a remaining PDB value and/or a resource selection window size and/or a resource selection window position and/or a position or size of a sensing window and/or a number of subchannels corresponding to a candidate resource and/or a transmission resource reservation period and/or a CAPC value. For example, multiple TBs or grants corresponding to the same S_A may have the same transmission priority value and/or may be within a priority value range that is (pre-)configured or defined. For example, multiple TBs or grants corresponding to the same S_A may have the same CAPC value and/or may be within a CAPC value range that is (pre-)configured or defined, or may have a CAPC value less than or equal to a representative CAPC value. For example, multiple TBs or grants corresponding to the same S_A may have the same transmission resource reservation period and/or may have transmission resource reservation periods for multiple TBs or grants that are multiples of a transmission resource reservation period for a specific TB or grant.

For example, when generating the set of available resources S_A for multiple TBs or grants, a transmission priority value and/or a remaining PDB value and/or a resource selection window size and/or a resource selection window position and/or a position or size of a sensing window and/or a number of subchannels corresponding to candidate resources and/or a transmission resource reservation period that configures or is used to configure S_A may be (pre-) configured. For example, whether the (pre-)configured values are used may be (pre-)configured or selected based on the UE implementation.

In embodiment(s) of the present disclosure, whether the UE configures the set of available resources S_A as candidate multi-slot resources and/or as (contiguous and/or discontinuous) candidate single-slot resources may be different depending on whether it is inside or outside the COT duration. For example, the UE may report the set of available resources S_A based on the candidate multi-slot resources and/or the set of available resources S_A based on the contiguous candidate single-slot resources and/or the set of available resources S_A based on the contiguous or discontinuous candidate single-slot resources to the upper layer, respectively. For example, the upper layer may use the sets of available resources for PSCCH/PSSCH resource selection by mixing them based on the maximum COT duration. For example, when the UE starts SL burst transmission based on the type 1 channel access procedure, the set of available resources S_A based on the candidate multi-slot resources and/or the set of available resources S_A based on the contiguous candidate single-slot resources may be generated and reported to the upper layer for candidate resources up to the maximum COT duration corresponding to the representative CAPC value for the SL burst transmission, and the set of available resources S_A based on the contiguous or discontinuous candidate single-slot resources may be generated and reported to the upper layer for candidate resources after the maximum COT duration. For example, when the UE starts SL burst transmission within a shared COT duration, the set of available resources S_A based on the candidate multi-slot resources and/or the set of available resources S_A based on the contiguous candidate single-slot resources may be generated and reported to the upper layer for candidate resources up to the maximum COT duration corresponding to the representative CAPC value for the shared COT or the end time of the shared COT, and the set of available resources S_A based on the contiguous or discontinuous candidate single-slot resources may be generated and reported to the upper layer for candidate resources after the maximum COT duration. For example, when the UE (re) selects resources for SL burst transmission, it may be assumed that the UE performs channel sensing based on the type 1 channel access procedure for the SL burst transmission. For example, when the UE (re)selects resources for SL burst transmission, the assumption for the maximum COT duration for the SL burst transmission may be the maximum or minimum or average value of the maximum COT duration value corresponding to the representative CAPC value for the SL burst transmission and/or a value less than or equal to the above value. For example, the type of candidate resources to be reported/used for each time interval may be determined based on the length of the representative maximum COT duration.

In embodiment(s) of the present disclosure, it has been described that S_A exists separately based on the basic unit of available resources, but different basic units of available resources may be allowed within a single S_A. For example, in this case, the process of determining the amount of available resources may be performed for each basic unit of available resources.

For example, the UE may not select candidate multi-slot resources and/or contiguous candidate single-slot resources within the set of available resources S_A outside the COT duration as PSCCH/PSSCH resources, and/or may perform resource (re)selection or resource drop if the resource is selected as the PSCCH/PSSCH resource.

Meanwhile, if time and/or frequency resources overlap between multiple S_As, the amount of candidate resources for each TB or SL grant may not be sufficient when the UE selects PSCCH/PSSCH resources for multiple TBs or SL grants. For example, the UE may derive a threshold for the amount of available candidate resources for each S_A by multiplying the amount of candidate resources within the resource selection window for S_A or the amount of candidate resources remaining in the resource selection window for S_A, excluding candidate resources that overlap (partially or fully) with available candidate resources belonging to other S_As (previously determined or selected based on the SL priority value or the CAPC value) in time and/or frequency, by a (pre-)configured ratio value. For example, the threshold derivation method for the amount of S_A may be applied differently depending on the presence or absence of S_A previously determined at the time of S_A determination and/or the priority value corresponding to S_A and/or the CAPC value corresponding to S_A. For example, when the UE performs resource selection by simultaneously considering multiple S_As, the ratio value used for deriving the threshold for the amount of S_A may be (pre-)configured differently or separately from the ratio value for the case where resource selection is performed based on a single S_A.

For example, if S_A corresponds to multiple TBs or multiple SL grants, the threshold for the amount of S_A may be derived based on the product of a (pre-)configured ratio value and/or the total number of candidate resources within the resource selection window and/or the amount of TB or SL grant corresponding to S_A. For example, the ratio value may be (pre-)configured differently or separately from the case where S_A corresponds to a single TB or SL grant. For example, the amount of TB or SL grant corresponding to S_A may be a (pre-)configured value and/or may be a value selected by the UE.

Meanwhile, after the UE generates and reports a single set or multiple sets of available resources S_A(s) to the upper layer, when the UE (re)selects resources for multiple TBs or grants from the single set or multiple sets of available resources S_A(s), it is necessary to determine in what order the UE will select PSCCH/PSSCH resources. For example, the UE may (re)select PSCCH/PSSCH resources in the unit of TB or grant from the single set or multiple sets of available resources S_A(s). For example, the order of TBs or grants for the PSCCH/PSSCH resource (re)selection may proceed in ascending order from a low transmission priority value. For example, the order of TBs or grants for the PSCCH/PSSCH resource (re)selection may proceed in descending order from a high transmission priority value. For example, the order of TBs or grants for the PSCCH/PSSCH resource (re)selection may proceed in ascending order from a lower remaining PDB value. The method is to allow the UE to preferentially use resources that are earlier in time for PSCCH/PSSCH transmission with a smaller remaining PDB. For example, the order of TBs or grants for the PSCCH/PSSCH resource (re)selection may proceed in descending order from a larger remaining PDB value. For example, the order of TBs or grants for the PSCCH/PSSCH resource (re)selection may proceed in order of the earliest arrival time and/or the earliest available time and/or the earliest resource (re)selection triggering time. For example, the order of TBs or grants for the PSCCH/PSSCH resource (re)selection may proceed in reverse order from the latest arrival time and/or the latest available time and/or the latest resource (re)selection trigger time. For example, the amount of minimum guaranteed resources for the later TB or grant in the PSCCH/PSSCH resource (re)selection may be (pre-)configured, and/or the PSCCH/PSSCH transmission resource selection for the preceding TB or grant may be performed so as to guarantee the amount of minimum guaranteed resources.

For example, an (initial or maximum) value and/or candidate values for the value for the number of slots of the contiguous candidate single-slot resource and/or the number of (contiguous) slots corresponding to the candidate multi-slot resource or the candidate resource may be determined based on a UE implementation and/or a (maximum or remaining) COT duration length according to a representative CAPC value for the SL transmission burst and/or a representative CAPC value for the SL transmission burst and/or a representative SL priority value for the SL transmission burst and/or a (maximum) number of transmissions for each grant and/or a number of grants available to the UE and/or a congestion control level and/or a QoS parameter and/or a channel busy ratio (CBR)/channel occupancy ratio (CR) level, etc.

Table 22 shows an example of SL channel busy ratio (CBR) and SL received signal strength indicator (RSSI).

[Table 22]

| SL CBR | |
|---|---|
| Definition | SL Channel Busy Ratio (SL CBR) measured in slot n is defined as the portion of sub-channels in the resource pool whose SL RSSI measured by the UE exceed a (pre-)configured threshold sensed over a CBR measurement window [n-a, n-1], wherein a is equal to 100 or $100 \cdot 2^{\mu}$ slots, according to higher layer parameter *sl-TimeWindowSizeCBR*. |
| Applicable for | RRC_IDLE intra-frequency, RRC_IDLE inter-frequency, RRC _CONNECTED intra-frequency, RRC _CONNECTED inter-frequency |
| SL RSSI | |
| Definition | Sidelink Received Signal Strength Indicator (SL RSSI) is defined as the linear average of the total received power (in [W]) observed in the configured sub-channel in OFDM symbols of a slot configured for PSCCH and PSSCH, starting from the 2nd OFDM symbol. For frequency range 1, the reference point for the SL RSSI shall be the antenna connector of the UE. For frequency range 2, SL RSSI shall be measured based on the combined signal from antenna elements corresponding to a given receiver branch. For frequency range 1 and 2, if receiver diversity is in use by the UE, the reported SL RSSI value shall not be lower than the corresponding SL RSSI of any of the individual receiver branches. |
| Applicable for | RRC_IDLE intra-frequency, RRC_IDLE inter-frequency, RRC _CONNECTED intra-frequency, RRC _CONNECTED inter-frequency |

Referring to Table 22, the slot index may be based on physical slot index.

Table 23 shows an example of SL channel occupancy ratio (CR).

[Table 23]

| Definition | Sidelink Channel Occupancy Ratio (SL CR) evaluated at slot n is defined as the total number of sub-channels used for its transmissions in slots [*n-a, n-1*] and granted in slots [*n, n+b*] divided by the total number of configured sub-channels in the transmission pool over [*n-a, n+b*]. |
|---|---|
| Applicable for | RRC_IDLE intra-frequency, RRC_IDLE inter-frequency, RRC _CONNECTED intra-frequency, RRC _CONNECTED inter-frequency |

Herein, a is a positive integer and b is 0 or a positive integer. According to higher layer parameter sl-TimeWindowSizeCR, a and b are determined by UE implementation with a+b+1 = 1000 or $1000 \cdot 2^{u}$ slots, and b < (a+b+1)/2, and n+b shall not exceed the last transmission opportunity of the grant for the current transmission. SL CR is evaluated for each (re)transmission. In evaluating SL CR, the UE shall assume the transmission parameter used at slot n is reused according to the existing grant(s) in slot [n+1, n+b] without packet dropping. The slot index is based on physical slot index. SL CR can be computed per priority level. A resource is considered granted if it is a member of a selected sidelink grant.

For example, when the UE reserves resources for different TBs, the resources selected for PSSCH may be restricted to exist within a single or multiple consecutive (sidelink) slots and/or within the same RB set(s).

For example, when the UE performs multiple different resource (re)selection procedures, the resources selected for PSSCH derived from each resource (re)selection process may be restricted to exist within a single or multiple consecutive (sidelink) slots and/or within the same RB set(s).

For example, when the UE performs the resource (re)selection procedure, the selected resources for the second PSSCH may be restricted to exist within a single or multiple consecutive (sidelink) slots and/or within the same RB set(s), by considering/including the time and/or frequency location of the resources selected for the first PSSCH derived from another resource (re)selection procedure of the UE.

For example, when the UE performs a first resource (re)selection process for a specific TB and/or for a specific periodic traffic, the UE may preferentially select, as PSSCH transmission resources, all or part of frequency resources of at least (immediately) preceding slots and/or (immediately) succeeding slots of all or part of PSSCH transmission resource slots derived in a second resource (re)selection process for another TB and/or another periodic traffic. For example, for each slot given priority for resource selection, the part of frequency resources may be frequency resources within all or part of an RB set including PSSCH transmission resources derived in the second resource (re)selection process corresponding to the priority slot. For example, the resource reservation period value for the second resource (re)selection process may be less than or equal to the resource reservation period value for the first resource (re)selection process. For example, a PSSCH transmission resource slot within a specific period derived by the second resource (re)selection process may include adjacent preceding and/or succeeding slots for all or part of a PSSCH transmission resource slot within a single period and/or multiple periods derived by the first resource (re)selection process. For example, the resource reservation period value for the second resource (re)selection process may be greater than or equal to the resource reservation period value for the first resource (re)selection process. In this case, the PSSCH transmission slots derived from the first and second resource (re)selection processes may or may not be adjacent to each other depending on the period for the second resource (re)selection process.

In embodiment(s) of the present disclosure, the resource (re)selection process may correspond to aperiodic traffic, in which case the resource reservation period value may be 0.

In embodiment(s) of the present disclosure, depending on the relationship between the CAPC value for the first resource (re)selection process and the CAPC value for the second resource (re)selection process, the (before and after) relationship between the PSSCH transmission resource slots derived by the first resource (re)selection process and the PSSCH transmission resource slots derived by the second resource (re)selection process may be different. For example, if the CAPC value for the first resource (re)selection process is greater than or equal to the CAPC value for the second resource (re)selection process, the PSSCH transmission slots derived by the first resource (re)selection process may include all or part of preceding slots adjacent to the PSSCH transmission slots derived by the second resource (re) selection process. For example, if the CAPC value for the first resource (re)selection process is less than or equal to the CAPC value for the second resource (re)selection process, the PSSCH transmission slots derived by the first resource (re) selection process may include all or part of succeeding slots adjacent to the PSSCH transmission slots derived by the second resource (re)selection process.

For example, the CAPC value for the first resource (re)selection process may be limited to be greater than or equal to the CAPC value for the second resource (re)selection process. In this case, the UE may perform channel access for transmission on PSSCH transmission resources derived by the first and second resource (re)selection processes based on the (latest) CAPC value for the subsequent first resource (re)selection process.

For example, the CAPC value for the first resource (re)selection process may be limited to be less than or equal to the CAPC value for the second resource (re)selection process. In this case, the UE may perform channel access on PSSCH transmission resources derived by the preceding second resource (re)selection process, and the UE may perform transmission in the unlicensed band without performing the separate type 1 channel access when using PSSCH transmission resources derived by the subsequent first resource (re)selection process.

For example, the CAPC value for the first resource (re)selection process may be limited to always be equal to the CAPC value for the second resource (re)selection process.

In embodiment(s) of the present disclosure, a method for generating the SL transmission burst using two resource (re)selection processes has been described, but it may also be extended from the idea of the present disclosure to generate the SL transmission burst between PSSCH transmission resources derived from three or more resource (re) selection processes.

Meanwhile, for the sidelink transmission group (SL transmission burst) adjacent in time and/or frequency derived from single and/or multiple resource (re)selection processes, resource reselection may occur for a specific resource of the transmission group, transmission omission/drop may occur, or the UE may release a retransmission resource after determining the transmission as ACK. In this case, the SL transmission burst may be cut off in the middle, and the UE may no longer skip the channel sensing operation.

For example, if the UE skips specific sidelink transmission in the SL transmission burst and/or performs resource reselection, the UE may also skip transmission and/or perform resource reselection for all or part of the remaining transmission resources in the SL transmission burst after the sidelink transmission resource. For example, if the UE skips specific sidelink transmission within the SL transmission burst and/or performs resource reselection, the UE may skip transmission and/or perform resource reselection for a part of remaining transmission resources for a period during which channel sensing can be performed on remaining transmissions within the SL transmission burst after the sidelink transmission resources. For example, if the UE performs resource reselection for transmission resources within the SL transmission burst, target transmission resources may be adjacent to each other even in the reselected resources. For example, if the UE performs resource reselection for transmission resources within the SL transmission burst, the UE may independently perform resource reselection for each target transmission resource.

For example, if the UE skips specific sidelink transmission in the SL transmission burst and/or performs resource reselection, the UE may perform resource reselection for all or part of the remaining transmission resources in a form of refilling or occupying the skipped sidelink transmission resource for the remaining transmissions within the SL transmission burst after the sidelink transmission resource and/or in a form of maintaining the SL transmission burst again. For example, if the UE releases resources by determining some resources in the SL transmission burst as ACK, and/or if the RB set(s) for the remaining resources in the SL transmission burst belong to the RB set(s) for the released resources, and/or if the allocated PRB(s) for the remaining resources in the SL transmission burst belong to the PRB(s) for the released resources, and/or if the SL priority value for the remaining resources in the SL transmission burst is equal to and/or greater than the SL priority value for the released resources, and/or if the CAPC value for the remaining resources in the SL transmission burst is equal to and/or less than the CAPC value for the released resources, the UE may skip the RSRP measurement value and/or resource exclusion operation during the resource reselection.

In embodiment(s) of the present disclosure, when the UE skips transmission and/or performs resource reselection for a specific sidelink transmission resource in the SL transmission burst, whether to continue transmission for the remaining transmission resources in the SL transmission burst or to skip transmission and/or to perform resource reselection may be determined differently depending on the number of remaining transmission resources in the SL transmission burst and/or whether the (remaining) PDB for sidelink transmission and/or the length of the channel sensing interval for the remaining transmission is sufficient.

Meanwhile, PSFCH transmission may exist at the beginning and/or in the middle of the SL transmission burst, and the CAPC value for PSFCH may be different from the CAPC value for PSSCH transmission. For example, the UE may apply/assume the CAPC value for PSFCH in the SL transmission burst by replacing it with a CAPC value of a specific PSSCH in the SL transmission burst. For example, the CAPC value of the specific PSSCH may be a CAPC value assumed/used when performing channel access for the SL transmission burst. For example, the CAPC value assumed/used when performing channel access for the SL transmission burst may be a CAPC value for PSSCH in the SL transmission burst and/or a CAPC value for PSFCH and/or a maximum value for the combination and/or a minimum value for the combination. For example, if the CAPC value for PSFCH in the SL transmission burst is greater than the CAPC value used when performing channel access for the SL transmission burst, the UE may perform channel sensing according to the type 1 channel access procedure using the CAPC value for PSFCH for the PSFCH transmission. For example, if the CAPC value for PSFCH in the SL transmission burst is greater than the CAPC value used when performing channel access for the SL transmission burst, the UE may skip the PSFCH transmission. For example, the UE may skip the PSFCH RX operation in the SL transmission burst and perform sidelink transmission in the PSFCH occasion.

Meanwhile, when the UE performs the resource (re)selection process, if the UE determines to select a transmission resource by avoiding a resource reserved by another UE (based on an RSRP measurement value, a transmission priority value, and/or a reception priority value, etc.), the UE may need to exclude resources (within the same RB set) within a (reference) channel sensing interval for the reserved resource and/or resources (within the same RB set) within a (reference) channel sensing interval when using the transmission resource of the UE. Meanwhile, when the reserved resource of another UE and the transmission resource of the UE are configured as multi-consecutive slots transmission (MCSt), the UE may, conversely, select the transmission resource adjacent to the reserved resource of another UE. Meanwhile, when the UE performs the resource (re)selection process, the UE may select a transmission resource by avoiding the previously selected resource for another SL grant or TB of the UE, and/or the UE may need to exclude resources (within the same RB set) within a (reference) channel sensing interval for the previously selected resource and/or resources (within the same RB set) within a (reference) channel sensing interval when the UE is currently using the transmission resource.

For example, if the CAPC value of the previously selected resource of the UE is greater than and/or equal to the transmission CAPC value for the resource (re)selection, and/or if the reference power during channel sensing operation and/or the maximum transmit power for the transmission resource pool to which the previously selected resource of the UE belongs is greater than and/or equal to the reference power during channel sensing operation and/or the maximum transmit power for the transmission resource pool for resource (re)selection, the UE may configure MCSt in a manner of selecting a resource at a later time or at the same time as the previously selected resource (without considering an additional gap).

For example, if the CAPC value of the previously selected resource of the UE is greater than and/or equal to the transmission CAPC value for the resource (re)selection, and/or if the reference power during channel sensing operation and/or the maximum transmit power for the transmission resource pool to which the previously selected resource of the UE belongs is greater than and/or equal to the reference power during channel sensing operation and/or the maximum transmit power for the transmission resource pool for resource (re)selection, the UE may select a transmission resource at a time earlier than the pre-selected resource by avoiding the pre-selected resource and/or the resources for the reference channel sensing interval for the pre-selected resource. That is, in the above situation, depending on whether the transmission resource selection of the UE is temporally earlier than and/or later than the pre-selected resource, whether an additional time gap, in addition to the pre-selected resource, is considered during resource selection may vary.

For example, the reference channel sensing interval length may be (pre-)configured for each resource pool and/or for each CAPC value and/or for each SL priority value and/or for each SL channel type, and/or may be determined based on the channel sensing interval length for the type 1 channel access procedure. For example, the reference channel sensing interval length may be the channel sensing interval length for the type 1 channel access procedure computed based on the maximum CWS according to the CAPC value (assuming that the result of the defer duration and/or the sensing slot is idle). For example, the reference channel sensing interval length may be the defer duration value according to the CAPC value. For example, the reference channel sensing interval length may be the actual channel sensing interval length.

For example, if the CAPC value of the previously selected resource of the UE is less than and/or equal to the transmission CAPC value for the resource (re)selection, and/or if the reference power during channel sensing operation and/or the maximum transmit power for the transmission resource pool to which the previously selected resource of the UE belongs is less than and/or equal to the reference power during channel sensing operation and/or the maximum transmit power for the transmission resource pool for resource (re)selection, the UE may configure MCSt in a manner of selecting a resource at an earlier time or at the same time as the previously selected resource (without considering an additional gap).

For example, if the CAPC value of the previously selected resource of the UE is less than and/or equal to the transmission CAPC value for the resource (re)selection, and/or if the reference power during channel sensing operation and/or the maximum transmit power for the transmission resource pool to which the previously selected resource of the UE belongs is less than and/or equal to the reference power during channel sensing operation and/or the maximum transmit power for the transmission resource pool for resource (re)selection, the UE may select a transmission resource at a time later than the pre-selected resource by avoiding the pre-selected resource and/or the resources for the reference channel sensing interval of the transmission resource for resource (re)selection. For example, the length of the reference channel sensing interval may be determined based on the transmission CAPC value of the UE for resource (re)selection. For example, if the UE performs transmission using the transmission resource through COT sharing and/or uses the channel access procedure of the type 2 series, the form of avoiding the resources for the reference channel sensing interval of the transmission resource may be skipped.

For example, if the CAPC value of the pre-reserved resource (of another UE) is greater than and/or equal to the transmission CAPC value for resource (re)selection, and/or if the transmission and/or transmission burst of the UE includes a UE using the pre-reserved resource as a recipient, and/or if the UE satisfies the COT sharing condition of the UE that uses the pre-reserved resource or that is initialized from the pre-reserved resource, the UE may configure MCSt by selecting a resource at a later time or (at the same time) than the pre-reserved resource (without considering an additional gap).

For example, if the CAPC value of the pre-reserved resource (of another UE) is greater than and/or equal to the transmission CAPC value for resource (re)selection, and/or if the transmission and/or transmission burst of the UE does not include a UE using the pre-reserved resource as a recipient, and/or if the UE does not satisfy the COT sharing condition of the UE that uses the pre-reserved resource or that is initialized from the pre-reserved resource, the UE may select a transmission resource at a time later than the pre-reserved resource by avoiding the pre-reserved resource and/or the resources for the reference channel sensing interval of the transmission resource for resource (re)selection.

For example, if the CAPC value of the pre-reserved resource (of another UE) is greater than and/or equal to the transmission CAPC value for resource (re)selection, and/or if the transmission and/or transmission burst of the UE includes a UE using the pre-reserved resource as a recipient, and/or if the UE satisfies the COT sharing condition of the UE that uses the pre-reserved resource or that is initialized from the pre-reserved resource, the UE may select a transmission resource at a time earlier than the pre-reserved resource by avoiding the pre-reserved resource and/or the resources for the reference channel sensing interval for the pre-reserved resource.

That is, in the above situation, depending on whether the transmission resource selection of the UE is temporally earlier than and/or later than the pre-reserved resource, whether an additional time gap, in addition to the pre-selected resource, is considered during resource selection may vary.

For example, if the CAPC value of the pre-reserved resource (of another UE) is less than and/or equal to the transmission CAPC value for resource (re)selection, and/or if the transmission or the transmission burst using the pre-reserved resource includes at least a UE that performs resource (re)selection as a receiver, and/or if the transmitting UE intends/determines to share COT for the transmission using the pre-reserved resource, the UE may configure MCSt by selecting a resource at an earlier time or (at the same time) than the pre-reserved resource (without considering an additional gap). For example, in this case, the UE may include COT sharing information in PSCCH/PSSCH transmission through the transmission resource.

For example, if the transmitting UE intends/determines to share COT for the transmission using the pre-reserved resource, the UE may preferentially select a resource at an earlier time than the pre-reserved resource. For example, in this case, the UE may include COT sharing information in PSCCH/PSSCH transmission through the transmission resource.

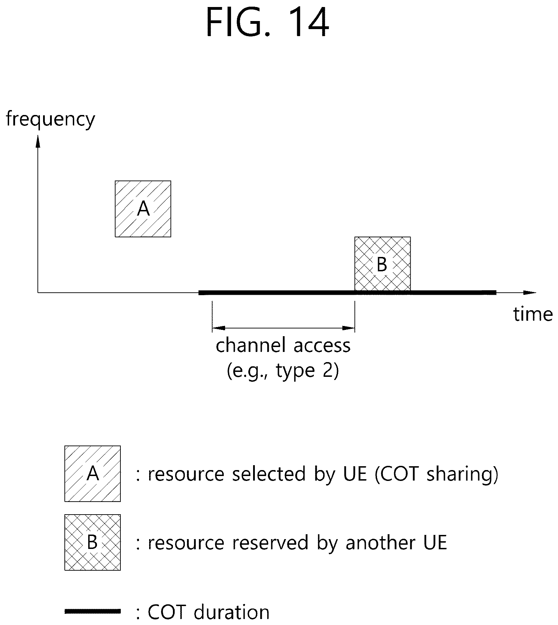

FIG. 14 shows an example in which a UE prevents channel access by another UE from being blocked through COT sharing, based on an embodiment of the present disclosure. The embodiment of FIG. 14 may be combined with various embodiments of the present disclosure.

Referring to FIG. 14, another UE may reserve the resource B, and the UE may detect that the resource B is reserved by another UE through sensing (e.g., SCI monitoring). In this case, since the UE cannot detect the type of channel access performed by another UE and/or the time of the channel access, the UE cannot determine whether its own resource reservation and transmission will block channel access by another UE. To solve this problem, if the UE intends/determines to share COT for the transmission using the pre-reserved resource (i.e., transmission using the resource B), the UE may preferentially select the resource (i.e., resource A) at an earlier time than the pre-reserved resource, and the UE may include COT sharing information in PSCCH/PSSCH transmission through the transmission resource.

In the above case, since another UE that has received the COT sharing information may perform a channel access procedure based on the channel access type 2 having a relatively short channel access time, resource selection and transmission by the UE may not block channel access of another UE.

For example, if the CAPC value of the pre-reserved resource (of another UE) is less than and/or equal to the transmission CAPC value for resource (re)selection, and/or if the transmission or the transmission burst using the pre-reserved resource does not include at least a UE that performs resource (re)selection as a receiver, and/or if the transmitting UE does not intend/determine to share COT for the transmission using the pre-reserved resource, the UE may select a transmission resource at a time earlier than the pre-reserved resource by avoiding the pre-reserved resource and/or the resources for the reference channel sensing interval for the pre-reserved resource.

For example, if the CAPC value of the pre-reserved resource (of another UE) is less than and/or equal to the transmission CAPC value for resource (re)selection, and/or if the transmission or the transmission burst using the pre-reserved resource includes at least a UE that performs resource (re)selection as a receiver, and/or if the transmitting UE intends/determines to share COT for the transmission using the pre-reserved resource, the UE may select a transmission resource at a time later than the pre-reserved resource by avoiding the pre-reserved resource and/or the resources for the reference channel sensing interval of the transmission resource for resource (re)selection.

For example, if a guard band is configured for a SL BWP and/or a SL resource pool and/or an RB set, the resource avoidance target resource(s) for the reference channel sensing interval in the embodiment(s) of the present disclosure may be limited to resources within the RB set to which the resource(s) corresponding to the reference channel sensing belongs.

For example, if a guard band is not configured for a SL BWP and/or a SL resource pool and/or an RB set, the resource avoidance target resource(s) for the reference channel sensing interval in the embodiment(s) of the present disclosure may be extended to resources in other RB sets in addition to the resources in the RB set to which the resource(s) corresponding to the reference channel sensing belongs. For example, if a guard band is not configured for a SL BWP and/or a SL resource pool and/or an RB set, the resource avoidance target resource(s) for the reference channel sensing interval in the embodiment(s) of the present disclosure may be all resources in the corresponding slot. For example, the other RB set may belong to the resource pool to which the resource(s) corresponding to the reference channel sensing belongs.

For example, in the case where the UE selects a transmission resource at a time earlier than the S-SSB resource slot, the UE may select the transmission resource by avoiding all or part of the resources corresponding to the reference channel sensing interval for the S-SSB transmission. For example, in this case, exceptionally, if the UE determines that the type 2 series channel access type is used for the S-SSB resource configuration, the avoidance procedure for the reference channel sensing interval may be skipped.

For example, in the case where the UE selects a transmission resource at a time later than the S-SSB resource slot, the UE may select the transmission resource by avoiding all or part of the resources corresponding to the reference channel sensing interval for the transmission resource.

For example, in the case of S-SSB transmission and reception, since the importance may be higher than that of other SL channel types, regardless of the comparison between SL priorities and/or the comparison between CAPC values, the UE may preferentially avoid all or part of the resources corresponding to the reference channel sensing interval for S-SSB transmission and/or the S-SSB resources when selecting the transmission resource.

For example, if it is determined that the type 2 series channel access procedure is used for the pre-reserved resource or the selected resource, the UE may skip the protection operation (excluding from available candidate resources and/or avoiding when selecting the transmission resource) for time and frequency resources (within the RB set) preceding the pre-reserved resource or the selected resource. For example, this may be the case where the type 2 series channel access procedure is indicated in the PSCCH/PSSCH on which information for the pre-reserved resource is received. For example, this may be the case where the pre-selected resource and/or the selected resource belongs to burst transmission. For example, this may be the case where the transmitting UE has given COT sharing information to the UE using the pre-reserved resource and/or where the reserved resource exists within the COT duration and within the RB set. For example, this may be the case where the pre-selected resource exists within the time interval and the RB set according to the COT sharing information received by the UE and/or where the transmission to be used for the selected resource satisfies the COT sharing requirement (CAPC restriction and/or receiver restriction).

For example, when performing resource selection and/or resource reselection, the resource conflict criteria and/or the resource reselection criteria may be different for the transmission resources of the first slot included in MCSt of the UE and the remaining slots. For example, when performing resource selection and/or resource reselection, the resource conflict criteria and/or the resource reselection criteria may be different for the earlier part and/or the middle part and/or the end part in time of the resources included in MCSt of the UE. For example, the earlier part, the middle part, and/or the end part in time may be determined based on a predefined or (pre-)configured ratio relative to the total number of slots included in MCSt. For example, the earlier part, the middle part, and/or the end part in time may be determined based on a predefined or (pre-)configured slot number threshold value. For example, differences in the resource conflict criteria and/or the resource reselection criteria for each resource (group) included in MCSt may mean that the RSRP threshold is configured/managed/determined separately for each of them. For example, among the resources included in MCSt, the resource conflict and/or the resource reselection may not be indicated and/or the condition thereof may be relaxed for resources corresponding to the middle part. The advantage of this is that the actual MCSt interval length can be prevented from being shortened due to resource reselection in the middle for the MCSt.

In embodiment(s) of the present disclosure, whether and how the UE provides COT information and/or whether and how the UE indicates PSSCH time resources may differ depending on the CAPC value and/or CAPC table used for COT initialization and/or the COT interval length.

In embodiment(s) of the present disclosure, the method of providing time domain resources is only an example, and the idea of the present disclosure can be extended and applied to the method of providing time domain resources and/or frequency domain resources.

The method described in the embodiment(s) of the present disclosure may operate in different combinations depending on whether the transmission is within the COT initiated by the transmitting UE, within the shared COT obtained by the transmitting UE from another transmitting node, or outside the COT.

Based on various embodiments of the present disclosure, the UE may determine candidate values for the candidate multi-slot resource or the number of (consecutive) slots corresponding to candidate resources and/or the number of slots of contiguous candidate single-slot resources, and the UE may select a (final) value from among the candidate values or within the candidate values. Through this, the UE can adaptively select the number of slots for multi-consecutive slots transmission (MCSt) by considering the CAPC value, the priority, the QoS requirement, the channel condition, etc. related to sidelink transmission, and can ensure the reliability of sidelink communication in the unlicensed band. Furthermore, MCSt-type transmission can be efficiently guaranteed through the resource (re)selection process, and the possibility of MCSt-type breakdown can be reduced, thereby increasing the possibility of transmission in the unlicensed band. In addition, the possibility of other RATs invading within the COT duration can be reduced.

Based on various embodiments of the present disclosure, if a UE intends/determines to share COT for transmission using a pre-reserved resource, the UE can preferentially select a resource at an earlier time than the pre-reserved resource, and the UE can include COT sharing information in PSCCH/PSSCH transmission through the transmission resource. In this case, since another UE that has received the COT sharing information can perform a channel access procedure based on the channel access type 2 having a relatively short channel access time, resource selection and transmission by the UE may not block channel access of another UE. Accordingly, problems such as inefficient use of resources in the unlicensed band and delay in communication in the unlicensed band can be solved.

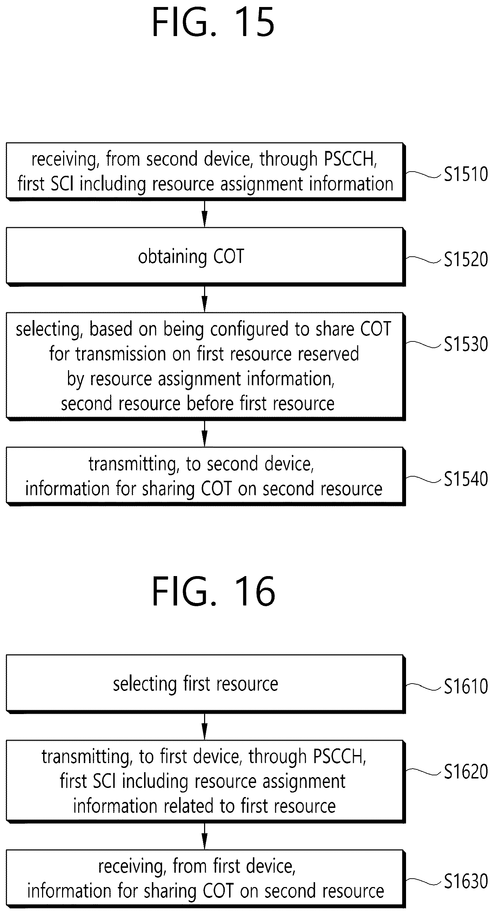

FIG. 15 shows a method for a first device to perform wireless communication, based on an embodiment of the present disclosure. The embodiment of FIG. 15 may be combined with various embodiments of the present disclosure.

Referring to FIG. 15, in step S1510, the first device may receive, from a second device, through a physical sidelink control channel (PSCCH), first sidelink control information (SCI) including resource assignment information. In step S1520, the first device may obtain a channel occupancy time (COT). In step S1530, the first device may select, based on being configured to share the COT for transmission on a first resource reserved by the resource assignment information, a second resource before the first resource. In step S1540, the first device may transmit, to the second device, information for sharing the COT on the second resource.

For example, based on being configured to share the COT for the transmission on the first resource reserved by the resource assignment information, the second resource before the first resource may be preferentially selected by the first device.

For example, the COT may be initiated by the first device.

For example, the COT may be initiated by the first device based on a channel access procedure where a time duration spanned by sensing slots that are sensed to be idle before transmission is random.

For example, the second resource may be located before the first resource in time.

For example, the information for sharing the COT may be transmitted to the second device through a physical sidelink shared channel (PSSCH). For example, the information for sharing the COT may be included in second SCI on the PSSCH.

For example, a time domain of the first resource may be within the COT.

For example, a channel access procedure performed by the second device within the COT may be a channel access procedure where a time duration spanned by sensing slots that are sensed to be idle before transmission is deterministic. For example, the time duration may be 25 microseconds, 16 microseconds, or zero.

For example, the second resource may be selected in a time domain before a processing time related to the information for sharing the COT from the first resource.

For example, based on a channel access priority class (CAPC) value related to the first resource being less than or equal to a CAPC value related to the second resource, the second resource before the first resource may be selected by the first device.

For example, based on a target of the transmission on the first resource including the first device, the second resource before the first resource may be selected by the first device.

The proposed method can be applied to devices based on various embodiments of the present disclosure. First, the processor 102 of the first device 100 may control the transceiver 106 to receive, from a second device, through a physical sidelink control channel (PSCCH), first sidelink control information (SCI) including resource assignment information. In addition, the processor 102 of the first device 100 may obtain a channel occupancy time (COT). In addition, the processor 102 of the first device 100 may select, based on being configured to share the COT for transmission on a first resource reserved by the resource assignment information, a second resource before the first resource. In addition, the processor 102 of the first device 100 may control the transceiver 106 to transmit, to the second device, information for sharing the COT on the second resource.

Based on an embodiment of the present disclosure, a first device adapted to perform wireless communication may be provided. For example, the first device may comprise: at least one transceiver; at least one processor; and at least one memory connected to the at least one processor and storing instructions. For example, the instructions, based on being executed by the at least one processor, may cause the first device to perform operations comprising: receiving, from a second device, through a physical sidelink control channel (PSCCH), first sidelink control information (SCI) including resource assignment information; obtaining a channel occupancy time (COT); selecting, based on being configured to share the COT for transmission on a first resource reserved by the resource assignment information, a second resource before the first resource; and transmitting, to the second device, information for sharing the COT on the second resource.

Based on an embodiment of the present disclosure, a processing device adapted to control a first device may be provided. For example, the processing device may comprise: at least one processor; and at least one memory connected to the at least one processor and storing instructions. For example, the instructions, based on being executed by the at least one processor, may cause the first device to perform operations comprising: receiving, from a second device, through a physical sidelink control channel (PSCCH), first sidelink control information (SCI) including resource assignment information; obtaining a channel occupancy time (COT); selecting, based on being configured to share the COT for transmission on a first resource reserved by the resource assignment information, a second resource before the first resource; and transmitting, to the second device, information for sharing the COT on the second resource.

Based on an embodiment of the present disclosure, a non-transitory computer-readable storage medium storing instructions may be provided. For example, the instructions, when executed, may cause a first device to perform operations comprising: receiving, from a second device, through a physical sidelink control channel (PSCCH), first sidelink control information (SCI) including resource assignment information; obtaining a channel occupancy time (COT); selecting, based on being configured to share the COT for transmission on a first resource reserved by the resource assignment information, a second resource before the first resource; and transmitting, to the second device, information for sharing the COT on the second resource.

FIG. 16 shows a method for a second device to perform wireless communication, based on an embodiment of the present disclosure. The embodiment of FIG. 16 may be combined with various embodiments of the present disclosure.

Referring to FIG. 16, in step S1610, the second device may select a first resource. In step S1620, the second device may transmit, to a first device, through a physical sidelink control channel (PSCCH), first sidelink control information (SCI) including resource assignment information related to the first resource. In step S1630, the second device may receive, from the first device, information for sharing a channel occupancy time (COT) on a second resource. For example, based on being configured to share the COT for transmission on the first resource reserved by the resource assignment information, the second resource before the first resource may be selected by the first device.

For example, based on being configured to share the COT for the transmission on the first resource reserved by the resource assignment information, the second resource before the first resource may be preferentially selected by the first device.

For example, the COT may be initiated by the first device.

For example, the COT may be initiated by the first device based on a channel access procedure where a time duration spanned by sensing slots that are sensed to be idle before transmission is random.

For example, the second resource may be located before the first resource in time.

For example, the information for sharing the COT may be transmitted to the second device through a physical sidelink shared channel (PSSCH). For example, the information for sharing the COT may be included in second SCI on the PSSCH.

For example, a time domain of the first resource may be within the COT.

For example, a channel access procedure performed by the second device within the COT may be a channel access procedure where a time duration spanned by sensing slots that are sensed to be idle before transmission is deterministic. For example, the time duration may be 25 microseconds, 16 microseconds, or zero.

For example, the second resource may be selected in a time domain before a processing time related to the information for sharing the COT from the first resource.

For example, based on a channel access priority class (CAPC) value related to the first resource being less than or equal to a CAPC value related to the second resource, the second resource before the first resource may be selected by the first device.

For example, based on a target of the transmission on the first resource including the first device, the second resource before the first resource may be selected by the first device.

The proposed method can be applied to devices based on various embodiments of the present disclosure. First, the processor 202 of the second device 200 may select a first resource. In addition, the processor 202 of the second device 200 may control the transceiver 206 to transmit, to a first device, through a physical sidelink control channel (PSCCH), first sidelink control information (SCI) including resource assignment information related to the first resource. In addition, the processor 202 of the second device 200 may control the transceiver 206 to receive, from the first device, information for sharing a channel occupancy time (COT) on a second resource. For example, based on being configured to share the COT for transmission on the first resource reserved by the resource assignment information, the second resource before the first resource may be selected by the first device.

Based on an embodiment of the present disclosure, a second device adapted to perform wireless communication may be provided. For example, the second device may comprise: at least one transceiver; at least one processor; and at least one memory connected to the at least one processor and storing instructions. For example, the instructions, based on being executed by the at least one processor, may cause the second device to perform operations comprising: selecting a first resource; transmitting, to a first device, through a physical sidelink control channel (PSCCH), first sidelink control information (SCI) including resource assignment information related to the first resource; and receiving, from the first device, information for sharing a channel occupancy time (COT) on a second resource. For example, based on being configured to share the COT for transmission on the first resource reserved by the resource assignment information, the second resource before the first resource may be selected by the first device.

Based on an embodiment of the present disclosure, a processing device adapted to control a second device may be provided. For example, the processing device may comprise: at least one processor; and at least one memory connected to the at least one processor and storing instructions. For example, the instructions, based on being executed by the at least one processor, may cause the second device to perform operations comprising: selecting a first resource; transmitting, to a first device, through a physical sidelink control channel (PSCCH), first sidelink control information (SCI) including resource assignment information related to the first resource; and receiving, from the first device, information for sharing a channel occupancy time (COT) on a second resource. For example, based on being configured to share the COT for transmission on the first resource reserved by the resource assignment information, the second resource before the first resource may be selected by the first device.

Based on an embodiment of the present disclosure, a non-transitory computer-readable storage medium storing instructions may be provided. For example, the instructions, when executed, may cause a second device to perform operations comprising: selecting a first resource; transmitting, to a first device, through a physical sidelink control channel (PSCCH), first sidelink control information (SCI) including resource assignment information related to the first resource; and receiving, from the first device, information for sharing a channel occupancy time (COT) on a second resource. For example, based on being configured to share the COT for transmission on the first resource reserved by the resource assignment information, the second resource before the first resource may be selected by the first device.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/-description, the same reference symbols may denote the same or corresponding hardware blocks, software blocks, or functional blocks unless described otherwise.

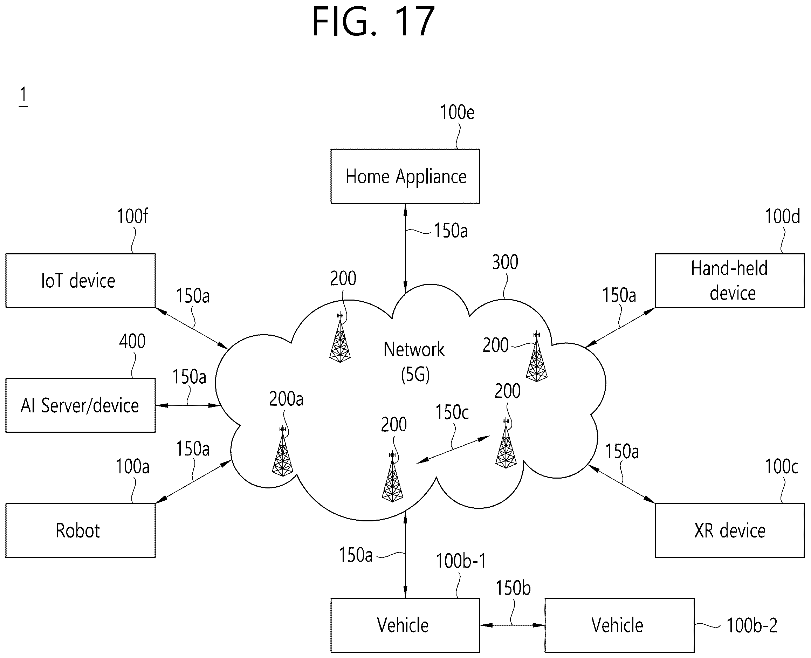

FIG. 17 shows a communication system 1, based on an embodiment of the present disclosure. The embodiment of FIG. 17 may be combined with various embodiments of the present disclosure.

Referring to FIG. 17, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

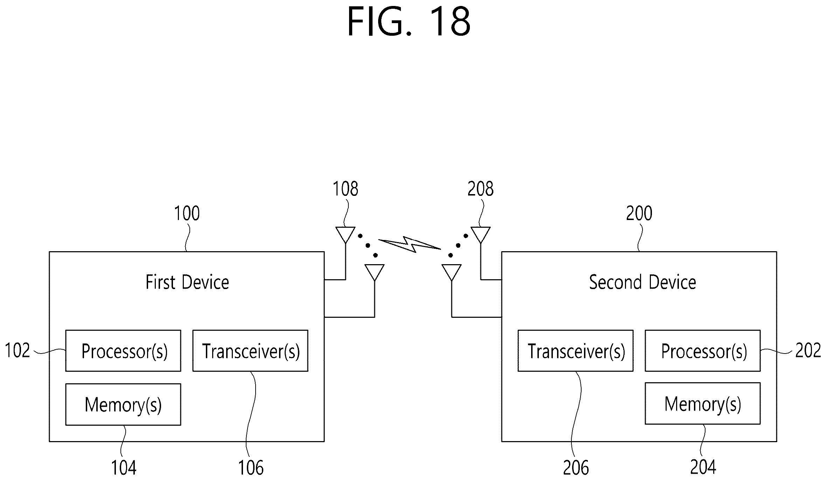

FIG. 18 shows wireless devices, based on an embodiment of the present disclosure. The embodiment of FIG. 18 may be combined with various embodiments of the present disclosure.

Referring to FIG. 18, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 17.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

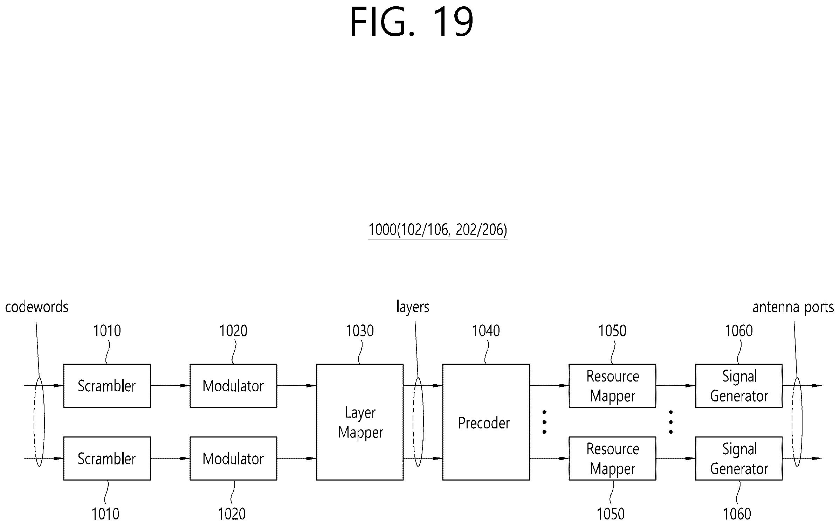

FIG. 19 shows a signal process circuit for a transmission signal, based on an embodiment of the present disclosure. The embodiment of FIG. 19 may be combined with various embodiments of the present disclosure.

Referring to FIG. 19, a signal processing circuit 1000 may include scramblers 1010, modulators 1020, a layer mapper 1030, a precoder 1040, resource mappers 1050, and signal generators 1060. An operation/function of FIG. 19 may be performed, without being limited to, the processors 102 and 202 and/or the transceivers 106 and 206 of FIG. 18. Hardware elements of FIG. 19 may be implemented by the processors 102 and 202 and/or the transceivers 106 and 206 of FIG. 18. For example, blocks 1010 to 1060 may be implemented by the processors 102 and 202 of FIG. 18. Alternatively, the blocks 1010 to 1050 may be implemented by the processors 102 and 202 of FIG. 18 and the block 1060 may be implemented by the transceivers 106 and 206 of FIG. 18.

Codewords may be converted into radio signals via the signal processing circuit 1000 of FIG. 19. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 19. For example, the wireless devices (e.g., 100 and 200 of FIG. 18) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

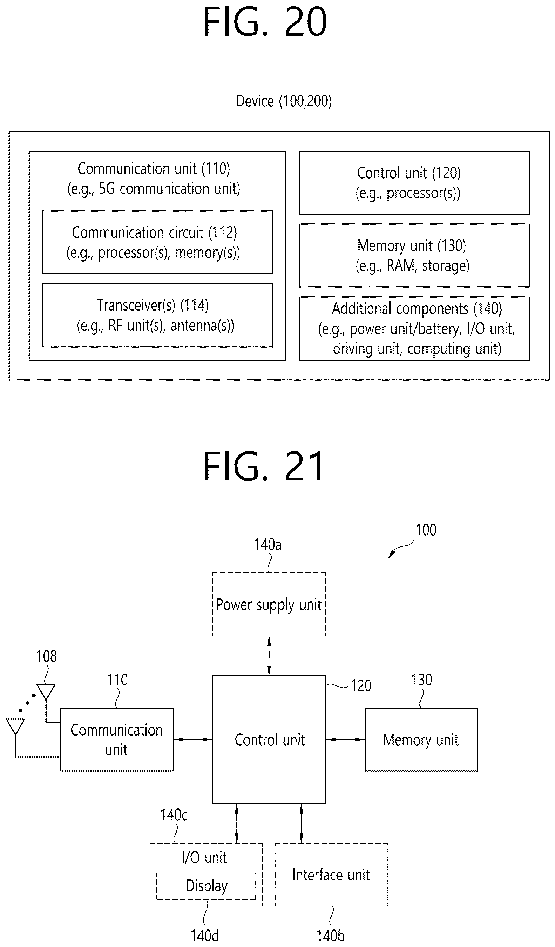

FIG. 20 shows another example of a wireless device, based on an embodiment of the present disclosure. The wireless device may be implemented in various forms according to a use-case/service (refer to FIG. 17). The embodiment of FIG. 20 may be combined with various embodiments of the present disclosure.

Referring to FIG. 20, wireless devices 100 and 200 may correspond to the wireless devices 100 and 200 of FIG. 18 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 18. For example, the transceiver(s) 114 may include the one or more transceivers 106 and 206 and/or the one or more antennas 108 and 208 of FIG. 18. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 17), the vehicles (100b-1 and 100b-2 of FIG. 17), the XR device (100c of FIG. 17), the hand-held device (100d of FIG. 17), the home appliance (100e of FIG. 17), the IoT device (100f of FIG. 17), a digital broadcast terminal, a hologram device, a public safety device, an MTC device, a medicine device, a fintech device (or a finance device), a security device, a climate/environment device, the AI server/device (400 of FIG. 17), the BSs (200 of FIG. 17), a network node, etc. The wireless device may be used in a mobile or fixed place according to a use-example/service.

In FIG. 20, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 20 will be described in detail with reference to the drawings.

FIG. 21 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 21 may be combined with various embodiments of the present disclosure.

Referring to FIG. 21, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to 140c correspond to the blocks 110 to 130/140 of FIG. 20, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/-

signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

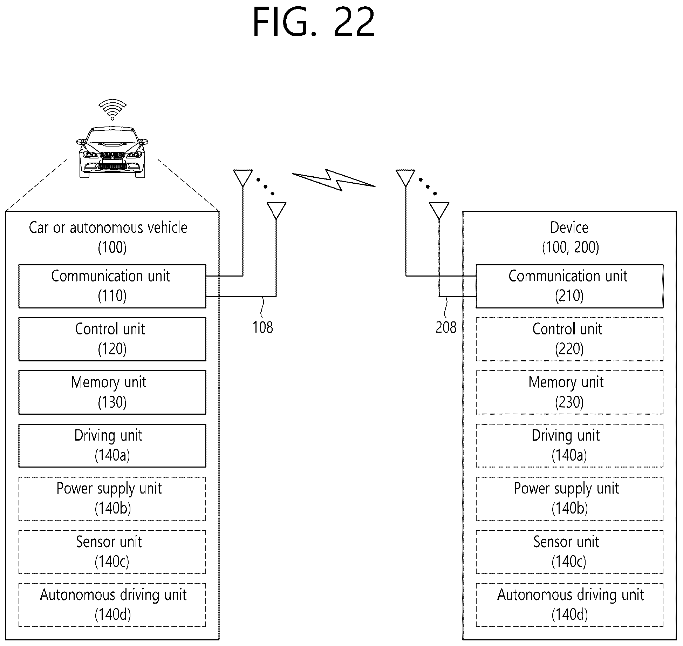

FIG. 22 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 22 may be combined with various embodiments of the present disclosure.

Referring to FIG. 22, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 20, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

**Claims**

1. A method for performing wireless communication by a first device, the method comprising:

   receiving, from a second device, through a physical sidelink control channel (PSCCH), first sidelink control information (SCI) including resource assignment information;
   obtaining a channel occupancy time (COT);
   selecting, based on being configured to share the COT for transmission on a first resource reserved by the resource assignment information, a second resource before the first resource; and

transmitting, to the second device, information for sharing the COT on the second resource.

2.  The method of claim 1, wherein, based on being configured to share the COT for the transmission on the first resource reserved by the resource assignment information, the second resource before the first resource is preferentially selected by the first device.

3.  The method of claim 1, wherein the COT is initiated by the first device.

4.  The method of claim 1, wherein the COT is initiated by the first device based on a channel access procedure where a time duration spanned by sensing slots that are sensed to be idle before transmission is random.

5.  The method of claim 1, wherein the second resource is located before the first resource in time.

6.  The method of claim 1, wherein the information for sharing the COT is transmitted to the second device through a physical sidelink shared channel (PSSCH).

7.  The method of claim 6, wherein the information for sharing the COT is included in second SCI on the PSSCH.

8.  The method of claim 1, wherein a time domain of the first resource is within the COT.

9.  The method of claim 1, wherein a channel access procedure performed by the second device within the COT is a channel access procedure where a time duration spanned by sensing slots that are sensed to be idle before transmission is deterministic.

10. The method of claim 9, wherein the time duration is 25 microseconds, 16 microseconds, or zero.

11. The method of claim 1, wherein the second resource is selected in a time domain before a processing time related to the information for sharing the COT from the first resource.

12. The method of claim 1, wherein, based on a channel access priority class (CAPC) value related to the first resource being less than or equal to a CAPC value related to the second resource, the second resource before the first resource is selected by the first device.

13. The method of claim 1, wherein, based on a target of the transmission on the first resource including the first device, the second resource before the first resource is selected by the first device.

14. A first device adapted to perform wireless communication, the first device comprising:

    at least one transceiver;
    at least one processor; and
    at least one memory connected to the at least one processor and storing instructions that, based on being executed by the at least one processor, cause the first device to perform operations comprising:

    receiving, from a second device, through a physical sidelink control channel (PSCCH), first sidelink control information (SCI) including resource assignment information;
    obtaining a channel occupancy time (COT);
    selecting, based on being configured to share the COT for transmission on a first resource reserved by the resource assignment information, a second resource before the first resource; and
    transmitting, to the second device, information for sharing the COT on the second resource.

15. A processing device adapted to control a first device, the processing device comprising:

    at least one processor; and
    at least one memory connected to the at least one processor and storing instructions that, based on being executed by the at least one processor, cause the first device to perform operations comprising:

    receiving, from a second device, through a physical sidelink control channel (PSCCH), first sidelink control information (SCI) including resource assignment information;

obtaining a channel occupancy time (COT);

selecting, based on being configured to share the COT for transmission on a first resource reserved by the resource assignment information, a second resource before the first resource; and

transmitting, to the second device, information for sharing the COT on the second resource.

16. A non-transitory computer-readable storage medium storing instructions that, when executed, cause a first device to perform operations comprising:

receiving, from a second device, through a physical sidelink control channel (PSCCH), first sidelink control information (SCI) including resource assignment information;

obtaining a channel occupancy time (COT);

selecting, based on being configured to share the COT for transmission on a first resource reserved by the resource assignment information, a second resource before the first resource; and

transmitting, to the second device, information for sharing the COT on the second resource.

17. A method for performing wireless communication by a second device, the method comprising:

selecting a first resource;

transmitting, to a first device, through a physical sidelink control channel (PSCCH), first sidelink control information (SCI) including resource assignment information related to the first resource; and

receiving, from the first device, information for sharing a channel occupancy time (COT) on a second resource, wherein, based on being configured to share the COT for transmission on the first resource reserved by the resource assignment information, the second resource before the first resource is selected by the first device.

18. A second device adapted to perform wireless communication, the second device comprising:

at least one transceiver;

at least one processor; and

at least one memory connected to the at least one processor and storing instructions that, based on being executed by the at least one processor, cause the second device to perform operations comprising:

selecting a first resource;

transmitting, to a first device, through a physical sidelink control channel (PSCCH), first sidelink control information (SCI) including resource assignment information related to the first resource; and

receiving, from the first device, information for sharing a channel occupancy time (COT) on a second resource, wherein, based on being configured to share the COT for transmission on the first resource reserved by the resource assignment information, the second resource before the first resource is selected by the first device.

19. A processing device adapted to control a second device, the processing device comprising:

at least one processor; and

at least one memory connected to the at least one processor and storing instructions that, based on being executed by the at least one processor, cause the second device to perform operations comprising:

selecting a first resource;

transmitting, to a first device, through a physical sidelink control channel (PSCCH), first sidelink control information (SCI) including resource assignment information related to the first resource; and

receiving, from the first device, information for sharing a channel occupancy time (COT) on a second resource,

wherein, based on being configured to share the COT for transmission on the first resource reserved by the resource assignment information, the second resource before the first resource is selected by the first device.

20. A non-transitory computer-readable storage medium storing instructions that, when executed, cause a second device to perform operations comprising:

selecting a first resource;

transmitting, to a first device, through a physical sidelink control channel (PSCCH), first sidelink control information (SCI) including resource assignment information related to the first resource; and
receiving, from the first device, information for sharing a channel occupancy time (COT) on a second resource, wherein, based on being configured to share the COT for transmission on the first resource reserved by the resource assignment information, the second resource before the first resource is selected by the first device.

FIG. 1

# FIG. 2

| | Radio | Microwave | Infrared | Visible | Ultraviolet | X-Ray | Gamma-Ray |
|---|---|---|---|---|---|---|---|

mmWave | Terahertz

Wavelength: $10^8$ m  1m  10mm  1mm  0.1mm  700nm  390nm  10nm  0.01nm

Radiation Type

Frequency: 3 Hz  300 MHz  30 GHz  300 GHz  3 THz  430 THz  730 THz  30 PHz  30 EHz

| Mega : $10^6$ | Giga : $10^9$ | Tera : $10^{12}$ | Peta : $10^{15}$ | Exa : $10^{18}$ |

# FIG. 3

# FIG. 4

# FIG. 5

# FIG. 6

# FIG. 7

PRB N3

$N_{BWP, 2}^{size}$

PRB 1

PRB 0

PRB N2

$N_{BWP, 1}^{size}$

PRB 1

PRB 0

PRB N1

$N_{BWP, 0}^{size}$

PRB 1

PRB 0

CRB 0

Carrier Bandwidth

$N_{BWP, 2}^{start}$

$N_{BWP, 1}^{start}$

$N_{BWP, 0}^{start}$

Freq.

Time

PRB 0 (Point A) in reference resource block

# FIG. 8

(a)

(b)

# FIG. 9

(a)

(b)

(c)

●: TX UE

⊘: RX UE

# FIG. 10

Frequency Bandwidth (e.g., BWP, RB set)

(e.g., 1 (P)RB)

Time instance/duration

# FIG. 11

frequency

time

N transmission resources

# FIG. 12

frequency

time

gap          gap

N transmission resources

# FIG. 13

channel access
(e.g., type 1)

A : resource selected by UE

B : resource reserved by another UE

# FIG. 14

EP 4 651 606 A1

# FIG. 15

| |
| --- |
| receiving, from second device, through PSCCH, first SCI including resource assignment information | ~S1510

| |
| --- |
| obtaining COT | ~S1520

| |
| --- |
| selecting, based on being configured to share COT for transmission on first resource reserved by resource assignment information, second resource before first resource | ~S1530

| |
| --- |
| transmitting, to second device, information for sharing COT on second resource | ~S1540

# FIG. 16

| |
| --- |
| selecting first resource | ~S1610

| |
| --- |
| transmitting, to first device, through PSCCH, first SCI including resource assignment information related to first resource | ~S1620

| |
| --- |
| receiving, from first device, information for sharing COT on second resource | ~S1630

56

# FIG. 17

EP 4 651 606 A1

# FIG. 18

First Device 100

Processor(s) 102

Memory(s) 104

Transceiver(s) 106

108

Second Device 200

Processor(s) 202

Memory(s) 204

Transceiver(s) 206

208

# FIG. 19

1000(102/106, 202/206)

codewords → Scrambler (1010) → Modulator (1020) → Layer Mapper (1030) → layers → Precoder (1040) → Resource Mapper (1050) → Signal Generator (1060) → antenna ports

codewords → Scrambler (1010) → Modulator (1020) → Layer Mapper (1030) → Precoder (1040) → Resource Mapper (1050) → Signal Generator (1060)

# FIG. 20

Device (100,200)

| Communication unit (110) (e.g., 5G communication unit) | Control unit (120) (e.g., processor(s)) |
|---|---|
| Communication circuit (112) (e.g., processor(s), memory(s)) | Memory unit (130) (e.g., RAM, storage) |
| Transceiver(s) (114) (e.g., RF unit(s), antenna(s)) | Additional components (140) (e.g., power unit/battery, I/O unit, driving unit, computing unit) |

# FIG. 21

# FIG. 22

| Car or autonomous vehicle (100) | Device (100, 200) |
|---|---|
| Communication unit (110) | Communication unit (210) |
| Control unit (120) | Control unit (220) |
| Memory unit (130) | Memory unit (230) |
| Driving unit (140a) | Driving unit (140a) |
| Power supply unit (140b) | Power supply unit (140b) |
| Sensor unit (140c) | Sensor unit (140c) |
| Autonomous driving unit (140d) | Autonomous driving unit (140d) |

108   208

## INTERNATIONAL SEARCH REPORT

| International application No. |
| --- |
| **PCT/KR2024/000279** |

| A. | CLASSIFICATION OF SUBJECT MATTER |
| --- | --- |

**H04W 72/25**(2023.01)i; **H04W 72/04**(2009.01)i; **H04W 72/542**(2023.01)i; **H04W 74/08**(2009.01)i; **H04W 24/08**(2009.01)i; **H04W 92/18**(2009.01)i

According to International Patent Classification (IPC) or to both national classification and IPC

| B. | FIELDS SEARCHED |
| --- | --- |

Minimum documentation searched (classification system followed by classification symbols)

H04W 72/25(2023.01); H04W 28/08(2009.01); H04W 28/26(2009.01); H04W 74/08(2009.01); H04W 76/14(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: PSCCH, 1st SCI, COT, reservation, selection, idle, sensing, random, channel access, PSSCH, 2nd SCI, CAPC(channel access priority class)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | HUAWEI et al. Channel access mechanism and resource allocation for sidelink operation over unlicensed spectrum. R1-2205886, 3GPP TSG RAN WG1 Meeting #110. Toulouse, France. 12 August 2022.<br>See sections 2.1-6.3.2.2; and figures 1 and 15-16. | 1-20 |
| A | US 2023-0007692 A1 (QUALCOMM INCORPORATED) 05 January 2023 (2023-01-05)<br>See paragraphs [0098]-[0127]; and figures 4-10. | 1-20 |
| A | WO 2022-241734 A1 (NOKIA SHANGHAI BELL CO., LTD. et al.) 24 November 2022 (2022-11-24)<br>See paragraphs [0030]-[0064]; and figures 3-7B. | 1-20 |
| A | US 2022-0377618 A1 (QUALCOMM INCORPORATED) 24 November 2022 (2022-11-24)<br>See paragraphs [0059]-[0094]; and figures 3-10. | 1-20 |
| A | NOKIA et al. On Channel Access Mechanism for SL-U. R1-2210827, 3GPP TSG RAN WG1 #111. Toulouse, France. 07 November 2022.<br>See sections 2.1-6. | 1-20 |

☐ Further documents are listed in the continuation of Box C.     ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **16 April 2024** | **17 April 2024** |

| Name and mailing address of the ISA/KR | Authorized officer |
| --- | --- |
| **Korean Intellectual Property Office**<br>**Government Complex-Daejeon Building 4, 189 Cheongsa-**<br>**ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/000279**

| Patent document cited in search report | | | Publication date (day/month/year) | Patent family member(s) | | | Publication date (day/month/year) |
|---|---|---|---|---|---|---|---|
| US | 2023-0007692 | A1 | 05 January 2023 | CN | 116458255 | A | 18 July 2023 |
| | | | | EP | 4245092 | A1 | 20 September 2023 |
| | | | | US | 11470645 | B2 | 11 October 2022 |
| | | | | US | 2022-0159725 | A1 | 19 May 2022 |
| | | | | WO | 2022-104307 | A1 | 19 May 2022 |
| WO | 2022-241734 | A1 | 24 November 2022 | CN | 115643826 | A | 24 January 2023 |
| US | 2022-0377618 | A1 | 24 November 2022 | US | 11751102 | B2 | 05 September 2023 |
| | | | | WO | 2022-245460 | A1 | 24 November 2022 |